# EUROPÄISCHE PATENTANMELDUNG

(11) **EP 2 127 922 A1**
(43) Veröffentlichungstag der Anmeldung: **02.12.2009**
(21) Anmeldenummer: 09290397.0
(22) Anmeldetag: 28.05.2009
(51) Int. Cl.: B60H 1/00, B60H 1/22

(54) **Heizungssystem eines Kraftfahrzeuges, Rahmen einer elektrischen Heizeinrichtung und Aufnahme für eine elektrische Heizeinrichtung**

(30) Priorität: 28.05.2008 EP 08290485; 16.10.2008 EP 08290974
(71) Anmelder: Behr France Rouffach SAS, 68250 Rouffach (FR); Behr GmbH & Co. KG, 70469 Stuttgart (DE)
(72) Erfinder: Denny, Geoffrey, 68170 Rixheim (FR); Miss, Pascal, 67600 Sélestat (FR); Weingaertner, Stéphane, 68250 Pfaffenheim (DE); Mille, Bertrand, 68130 Aspach (FR); Gautsch, Laurent, 67600 Mussig (FR); Gravier, Dominique, 68200 Mulhouse (FR); Bopp, Alexander, 75428 Illingen (DE); Blum, Thomas, 68570 Soultzmatt (FR)
(74) Vertreter: Grauel, Andreas

(57) **Zusammenfassung**

Die Erfindung betrifft ein Heizungssystem eines Kraftfahrzeuges, insbesondere eine Klimaanlage (2) zum Heizen einer Fahrgastzelle eines Kraftfahrzeuges, mit einer elektrischen Heizeinrichtung (4) und mit einer Aufnahme (5) zum Halten der elektrischen Heizeinrichtung, bei welchem die elektrische Heizeinrichtung (4) einen Rahmen (8) aufweist, in welchem elektrische Heizelemente (9) angeordnet werden können, und bei welchem die Aufnahme eine Einschuböffnung (6) aufweist, in welche der Rahmen (8) der elektrischen Heizeinrichtung entlang einer Einschubrichtung eingeschoben werden kann, wobei der Rahmen (8) der elektrischen Heizeinrichtung und/oder die Aufnahme (5) zum Halten der elektrischen Heizeinrichtung Mittel (14) zum Sichern gegen ein unbeabsichtigtes Lösen des Rahmens von der Aufnahme aufweisen, wodurch die elektrische Heizeinrichtung wesentlich einfacher montiert und in der Aufnahme gehalten werden kann.

## Beschreibung

Die Erfindung betrifft ein Heizungssystem eines Kraftfahrzeuges, insbesondere eine Klimaanlage zum Heizen einer Fahrgastzelle eines Kraftfahrzeuges, mit einer elektrischen Heizeinrichtung und mit einer Aufnahme zum Halten der elektrischen Heizeinrichtung, bei welchem die elektrische Heizeinrichtung einen Rahmen aufweist, in welchem elektrische Heizelemente angeordnet werden können, und bei welchem die Aufnahme eine Einschuböffnung aufweist, in welche der Rahmen der elektrischen Heizeinrichtung entlang einer Einschubrichtung eingeschoben werden kann. Auch betrifft die Erfindung sowohl einen Rahmen einer elektrischen Heizeinrichtung eines Heizungssystems an einem Kraftfahrzeug, insbesondere einer Klimaanlage einer Fahrgastzelle, als auch eine Aufnahme für eine elektrische Heizeinrichtung eines Heizungssystems an einem Kraftfahrzeug, insbesondere einer Klimaanlage einer Fahrgastzelle. Darüber hinaus betrifft die Erfindung ein Verfahren zum Montieren einer elektrischen Heizeinrichtung an einem Gehäuse eines Heizungssystems eines Kraftfahrzeuges, bei welchem ein Rahmen der elektrischen Heizeinrichtung in eine Einschuböffnung des Gehäuses eingeschoben wird.

Gattungsgemäße Heizungssysteme sind aus dem Stand der Technik vielfältig bekannt und mit ihnen lässt sich insbesondere eine Fahrgastzelle eines Kraftfahrzeuges gut beheizen. Immer häufiger werden in solche Heizungssysteme elektrische Zuheizer integriert, um eine Fahrgastzelle bereits kurz nach Start des Kraftfahrzeuges oder bei sehr niedrigen Außentemperaturen schneller aufheizen zu können. Die elektrischen Zuheizer werden hierbei in Aufnahmen, beispielsweise in eine Aufnahme eines Gehäuses einer Klimaanlage, eingesteckt und mittels zusätzlichem Befestigungsmaterial, wie geeignete Schrauben oder ähnlichem, an der Aufnahme befestigt, meist geschraubt.

Darüber hinaus existieren Heiz- und Belüftungsanlagen für einen Innenraum eines Kraftfahrzeuges, wie beispielsweise aus der Druckschrift DE 698 11 830 T2 bekannt ist, bei welchem ein elektrischer Zuheizer mit einem Zusatzbeschlag, wie etwa zusätzliche Flansche, wechselwirken kann, um eine Montage des elektrischen Zuheizers etwa in einem Klimaanlagengehäuse zu vereinfachen. Hierzu wird ein Rahmen des elektrischen Zuheizers in geeigneten Flanschen gehalten, wobei die Flansche Bestandteile von Kühlmittelsammelkästen eines Wärmetauschers der Heiz- und Belüftungsanlage sind. Derart mittels der Flansche gehalten, kann der elektrische Zuheizer gemeinsam mit dem Wärmetauscher relativ einfach und daher bequem montiert werden. Jedoch ist eine nachträgliche Demontage des elektrischen Zuheizers ohne gleichzeitige Demontage des gesamten Wärmetauschers nicht möglich.

Es ist Aufgabe vorliegender Erfindung gattungsgemäße Heizungssysteme, insbesondere eine elektrische Heizeinrichtung hiervon, weiter zu entwickeln, so dass etwa die elektrische Heizeinrichtung noch einfacher in ein Heizungssystem eines Kraftfahrzeuges integriert werden kann.

Die Aufgabe der Erfindung wird von einem Heizungssystem eines Kraftfahrzeuges, insbesondere von einer Klimaanlage zum Heizen einer Fahrgastzelle eines Kraftfahrzeuges, mit einer elektrischen Heizeinrichtung und mit einer Aufnahme zum Halten der elektrischen Heizeinrichtung gelöst, bei welchem die elektrische Heizeinrichtung einen Rahmen aufweist, in welchem elektrische Heizelemente angeordnet werden können, und bei welchem die Auf nahme eine Einschuböffnung aufweist, in welche der Rahmen der elektrischen Heizeinrichtung entlang einer Einschubrichtung eingeschoben werden kann, wobei der Rahmen der elektrischen Heizeinrichtung und/oder die Aufnahme zum Halten der elektrischen Heizeinrichtung Mittel zum Sichern gegen ein unbeabsichtigtes Lösen des Rahmens von der Aufnahme aufweisen.

Sind an dem Rahmen und/oder an der Aufnahme bereits Mittel zum Sichern gegen ein Lösen, nachfolgend kurz auch Sicherungsmittel genannt, des Rahmens von der Aufnahme vorhanden, kann vorliegend vorteilhafter Weise auf zusätzliches Befestigungsmaterial verzichtet werden. Beispielsweise werden keine Schrauben mehr benötigt, mittels welcher der Rahmen an die Aufnahme geschraubt werden muss. Hierdurch lässt sich der Material- und/oder Montageaufwand gegenüber herkömmlichen Heizungssystemen reduzieren. Insbesondere kann mittels der Sicherungsmittel vorliegend eine Selbstfixierung der elektrischen Heizeinrichtung realisiert werden, so dass der Rahmen mit Selbstfixiereinrichtungen ausgestattet ist.

Kumulativ oder alternativ kann auch eine Klebeverbindung zwischen dem Rahmen und der Aufnahme vorgesehen sein, jedoch lässt sich eine Klebeverbindung beispielsweise hinsichtlich Servicearbeiten an der elektrischen Heizeinrichtung schlecht lösen.

Der Begriff "Mittel zum Sichern" erfasst vorliegend jegliche Einrichtungen zum Befestigen einer elektrischen Heizeinrichtung, insbesondere eines Rahmens einer solchen Heizeinrichtung, wobei derartige Einrichtungen direkt an dem Rahmen und/oder an der Aufnahme vorhanden sind. Dies bedeutet, dass die Sicherungsmittel ein herstellerseitiger Bestandteil insbesondere des Rahmens sind oder zumindest bereits vor der Montage der elektrischen Heizeinrichtung an dem Rahmen angeordnet, dass heißt befestigt, sind. Hierdurch wird vorteilhafter Weise vermieden, dass zusätzliches Befestigungsmaterial nach dem Einschieben der elektrischen Heizeinrichtung, beispielsweise in ein Gehäuse einer Klimaanlage eines Kraftfahrzeuges, erforderlich ist, um die Heizeinrichtung an der Klimaanlage zu sichern. Insbesondere eine axiale Sicherung der Heizeinrichtung ist vorliegend besonders vorteilhaft, da hierdurch die Heizeinrichtung entgegen der Einschubrichtung unbeabsichtigt nicht mehr aus der Aufnahme heraus gelangen kann.

Der Begriff "Heizungssystem" beschreibt vorliegend eine Heizung eines Kraftfahrzeuges, welche im Wesentlichen zum Beheizen einer Fahrgastzelle des Kraftfahrzeuges dient. Hierbei umfasst das Heizungssystem beispielsweise eine reguläre Heizung des Kraftfahrzeuges, welche Wärmeenergie zum Heizen aus einem Kühlmittelkreislauf einer Brennkraftmaschine des Kraftfahrzeuges beziehen kann. Darüber kann das Heizungssystem auch Lüftungskanäle umfassen, mittels welcher der Fahrgastzelle erwärmte Luft zugeführt werden kann. Vorzugsweise ist in dem Heizungssystem auch eine Klimaanlage integriert, mittels welcher Luft für die Fahrgastzelle entsprechend den Bedürfnissen der aufbereitet werden kann.

Es versteht sich, dass die vorliegende Aufnahme in nahezu allen Komponenten des Heizungssystems sein kann, wobei eine bevorzugte Ausführungsvariante vorsieht, dass die Aufnahme in einem Gehäuse einer Klimaanlage vorgesehen ist. So kann eine elektrische Heizeinrichtung in einem zentralen Bauteil des Heizungssystems eingebaut werden, um erwärmte Luft in einer Vielzahl von Lüftungskanälen des Heizungssystems bereit stellen zu können. Es versteht sich, dass die Aufnahme auch in einem Gehäuse eines einzelnen Lüftungskanals eingearbeitet sein kann. Die Aufnahme kann hierbei mittels eines Gehäuses oder eines Gestells realisiert sein. Vorteilhafter Weise umfasst die Aufnahme in der Regel eine Einschuböffnung, in welche die vorliegende elektrische Heizeinrichtung eingeschoben werden kann. Wie nachstehend noch im Zusammenhang mit Ausführungsbeispielen erläutert werden wird, kann die elektrische Heizeinrichtung besonders platzsparend und einfach in die Aufnahme eingeschoben werden, wenn sie mit einer Einschubrichtung, die in Richtung einer axialen Längserstreckung der elektrischen Heizeinrichtung ausgerichtet ist, in die Aufnahme eingeschoben wird.

Bei der vorliegenden elektrischen Heizeinrichtung handelt es sich vorzugweise um eine elektrisch betriebene Einrichtung mit elektrischen Heizelementen, wobei die elektrischen Heizelemente bevorzugt als PTC-Heizelemente ausgelegt sind, wie sie im Stand der Technik bereits an Kraftfahrzeugheizungen eingesetzt werden können. Die elektrischen Heizelemente sind hierbei meistens in entsprechend ausgebildete Felder eines Rahmens der elektrischen Heizeinrichtung eingelegt, so dass auch mehrere Heizelemente mit einer einzigen elektrischen Heizeinrichtung in einem einzigen Rahmen bereit gestellt werden können. Der Rahmen kann vorliegend vielfältig gestaltet sein. Beispielsweise ist er mehrteilig ausgebildet, so dass die elektrischen Heizelemente einfach in hierfür vorgesehene Felder einer ersten Rahmenhälfte eingelegt werden können. Sind alle elektrischen Heizeinrichtungen ordnungsgemäß in die Felder eingelegt, kann eine weitere Rahmenhälfte mit der ersten Rahmenhälfte verbunden werden. Es versteht sich, dass die vorliegenden Sicherungsmittel an nahezu beliebigen Rahmenteilen vorgesehen sein können, welche gemeinsam mit weiteren Rahmenteilen den vorliegenden Rahmen der elektrischen Heizeinrichtung bilden können.

Die Aufgabe der Erfindung wird somit auch von einem Rahmen einer elektrischen Heizeinrichtung eines Heizungssystems an einem Kraftfahrzeug, insbesondere einer Klimaanlage einer Fahrgastzelle, gelöst, wobei der Rahmen Sicherungsmittel und/oder axial wirkende Rastmittel aufweist, mittels welcher der Rahmen an einem Gehäuse des Heizungssystems axial gesichert werden und/oder einrasten kann. Mittels eines solchen Rahmens kann die elektrische Heizeinrichtung schnell und mit baulich geringem Aufwand dauerhaft an einer geeigneten Aufnahme, beispielsweise einer Klimaanlage, befestigt werden.

Um den Rahmen der elektrischen Heizeinrichtung besonders einfach in bzw. an der Aufnahme befestigen zu können, sieht eine erste vorteilhafte Ausführungsvariante vor, dass die Sicherungsmittel axial wirkende Rastmittel umfassen, welche herstellerseitig an dem Rahmen der elektrischen Heizeinrichtung angeordnet sind.

Sind die axial wirkenden Rastmittel bereits herstellerseitig an dem Rahmen vorgesehen, werden keine externen Befestigungsmittel benötigt, um die elektrische Heizeinrichtung beispielsweise in oder an einem Gehäuse einer Klimaanlage zu befestigen. Hierdurch kann eine Montage wesentlich schneller vorgenommen werden als hinsichtlich herkömmlich verwendeter Rahmen.

Der Begriff "axial wirkende Rastmittel" beschreibt vorliegend jegliche Gebilde, die zumindest teilweise in einer Nut, hinter einer Nase oder einem Vorsprung einrasten können, wenn sie in eine erste Richtung bewegt werden. Insbesondere ist eine rückwärtige Bewegung der Rastmittel nicht mehr möglich, so dass ein mit derartigen Rastmittel ausgestattetes Bauteil einfach an einem weiteren Bauteil gesichert werden kann. Die Nut, die Nase und/oder der Vorsprung befinden sich als Gegenstruktur zu den Sicherungsmittel oder Rastmittel vorzugsweise an dem weiteren Bauteil. Solche Rastmittel sind aus dem Stand der Technik vielseitig bekannt und werden oft eingesetzt. Somit wird die Aufgabe der Erfindung auch von einem Rastmittel, insbesondere von einem axial wirkenden Rastmittel, gelöst, welches an einer elektrischen Heizeinrichtung eines Heizungssystems eines Kraftfahrzeuges verwendet wird. Vorteilhafter Weise können die Kosten im Zusammenhang mit einer derartigen elektrischen Heizeinrichtung gesenkt werden, wenn die Sicherungsmittel oder die axial wirkenden Rastmittel bereits vor einem Einbau der elektrischen Heizeinrichtung an einem Rahmen und/oder an einem Aufnahmegehäuse angeordnet sind.

Da der Rahmen der elektrischen Heizeinrichtung vorliegend idealerweise bereits beim Einschieben in eine Aufnahme, vorzugsweise eines Gehäuses einer Klimaanlage, rastend befestigt werden kann, wird die Aufgabe der Erfindung auch von einem Verfahren zum Montieren einer elektrischen Heizeinrichtung an einem Gehäuse eines Heizungssystems eines Kraftfahrzeuges gelöst, bei welchem ein Rahmen der elektrischen Heizeinrichtung in eine Einschuböffnung des Gehäuses eingeschoben wird, und bei welchem der Rahmen während einer Einschubbewegung an dem Gehäuse einrastet und befestigt wird. Hierdurch kann eine hohe Zeitersparnis beim Zusammenbauen eines Heizungssystems erzielt werden.

Sind die Sicherungsmittel oder die axial wirkende Rastmittel in dem Rahmen der elektrischen Heizeinrichtung integriert, können die Sicherungsmittel und/oder die axial wirkenden Rastmittel insbesondere verliersicher an dem Rahmen angeordnet werden. Hierdurch kann die Gefahr einer Verzögerung bei Montagearbeiten drastisch weiter gesenkt werden.

In diesem Zusammenhang ist es vorteilhaft, wenn die Sicherungsmittel oder die axial wirkenden Rastmittel mit dem Rahmen der elektrischen Heizeinrichtung einstückig ausgebildet sind.

Eine weitere bevorzugte Ausführungsvariante sieht hierbei vor, dass die Rastmittel an dem Rahmen angespritzt sind. Sind die Sicherungsmittel oder die axial wirkenden Rastmittel einstückig mit dem Rahmen ausgebildet, kann die Gefahr einer Undichtigkeit des Rahmens im Bereich der Sicherungsmittel und/oder der axial wirkenden Rastmittel nahezu ausgeschlossen werden. Da erwärmte Luft innerhalb des Heizungssystems geführt wird, ist es wichtig, dass alle Komponenten des Heizungssystems möglichst luftdicht sind bzw. luftdicht zueinander angeordnet sind, um die erwärmte Luft möglichst verlustfrei an der Fahrgastzelle bereit stellen zu können. Dies trifft auch auf Befestigungsmittel einer elektrischen Heizeinrichtung zu.

Es versteht sich, dass die Sicherungsmittel und/oder die axial wirkenden Rastmittel unterschiedlich gestaltet sein können, solange sie eine betriebssichere Befestigung einer elektrischen Heizeinrichtung in einer geeigneten Aufnahme gewährleisten können. Vorteilhaft verrasten können der Rahmen und die Aufnahme, wenn die Sicherungsmittel oder die axial wirkenden Rastmittel wenigstens einen Rasthaken aufweisen, welcher mit seinem freien Ende entgegen der Einschubrichtung des Rahmens ausgerichtet ist. Dadurch, dass der Rasthaken entgegen der Einschubrichtung des Rahmens ausgerichtet ist, kann er besonders gut eine Rückbewegung des Rahmens innerhalb der Aufnahme verhindern, welche der Einschubrichtung im Wesentlichen entgegen gesetzt ist.

Vorzugsweise weisen insbesondere die axial wirkenden Rastmittel eine Vielzahl an solchen Rasthaken auf. Beispielsweise ist ein Rastmittel in einem Sägezahndesign oder ähnlichem ausgebildet. Darüber hinaus ist es vorteilhaft, wenn die Sicherungsmittel oder die Rastmittel einen Anschlag aufweisen, so dass sie zum Verrasten mit einer Gegenstruktur nicht unbeabsichtigt zu tief in die Gegenstruktur hinein gedrückt werden können.

Um die Sicherungsmittel oder die axial wirkenden Rastmittel besonders gut etwa mit einer Gegenstruktur in Kontakt bringen zu können, ist es vorteilhaft, wenn die Sicherungsmittel oder die axial wirkenden Rastmittel eine Positionierspitze aufweisen. Die Positionierspitze kann sich hierbei an einem freien Ende des Rastmittels befinden.

Kumulativ oder alternativ ist es vorteilhaft, wenn die Sicherungsmittel oder die axial wirkenden Rastmittel umlaufend an einer Einschuböffnung der Aufnahme angeordnet sind. Hierdurch können die Sicherungsmittel oder die axial wirkenden Rastmittel besonders innig mit dem Rahmen der elektrischen Heizeinrichtung wechselwirken. Laufen die Sicherungsmittel oder die axial wirkenden Rastmittel an der Aufnahme zudem durchgehend um die Einschuböffnung um, ist der Rahmen besonders gut in oder an der Aufnahme gesichert.

Da die elektrische Heizeinrichtung alternativ auch ausschließlich mit Sicherungsmitteln bzw. mit Rastmitteln, welche an der Aufnahme vorzugsweise bereits herstellerseitig vorgesehen und befestigt sind, in bzw. an der Aufnahme befestigt werden kann, sind die in diesem Zusammenhang genannten Merkmale auch ohne die übrigen Merkmale der Erfindung vorteilhaft.

In diesem Zusammenhang wird die Aufgabe der Erfindung auch von einer Aufnahme für eine elektrische Heizeinrichtung eines Heizungssystems an einem Kraftfahrzeug, insbesondere einer Klimaanlage einer Fahrgastzelle, gelöst, wobei die Aufnahme Sicherungsmittel und/oder axial wirkende Rastmittel aufweist, mittels welcher der Rahmen an einem Gehäuse des Heizungssystems axial gesichert werden und/oder einrasten kann.

Sind die Sicherungsmittel oder die axial wirkenden Rastmittel umlaufend an einer Einschuböffnung der Aufnahme angeordnet, können die Sicherungsmittel oder die Rastmittel auch linienförmig mit dem Rahmen der elektrischen Heizeinrichtung in Kontakt treten.

Vorzugsweise sind die Sicherungsmittel oder die axial wirkenden Rastmittel innerhalb einer Einschuböffnung der Aufnahme oder in die Einschuböffnung hineinragend angeordnet, so dass sie mit dem Rahmen besonders platzsparend in Kontakt treten können.

Der Rahmen der elektrischen Einrichtung kann besonders gut mit Sicherungsmitteln oder mit Rastmitteln, welche an der Aufnahme vorgesehen sind, gehalten werden, wenn die Sicherungsmittel oder die axial wirkenden Rastmittel wenigstens einen Rasthaken aufweisen, welcher mit seinem freien Ende in Einschubrichtung des Rahmens ausgerichtet ist.
Weitere bevorzugte Ausführungsvarianten der Erfindung können vorsehen, dass die Sicherungsmittel oder die axial wirkenden Rastmittel eine Dichtlippe und/oder einen Schwingungsdämpfer umfassen.

Beispielsweise können insbesondere geschlossen um die Einschuböffnung umlaufende Sicherungsmittel oder Rastmittel gleichzeitig eine Dichtlippe bilden, mittels welcher die Aufnahme gegenüber dem Rahmen der elektrischen Heizeinrichtung abgedichtet werden kann. Hierdurch ist die Gefahr verringert, dass erwärmte Luft aus einem Heizungssystem eines Kraftfahrzeuges unbeabsichtigt in die Umgebung gelangen und für ein Beheizen einer Fahrgastzelle nicht mehr zur Verfügung stehen kann.

Darüber hinaus können insbesondere geschlossen um die Einschuböffnung umlaufende Sicherungsmittel oder Rastmittel kumulativ oder alternativ einen Schwingungsdämpfer bilden. Hierdurch können Schwingungen in beiden Richtungen zwischen dem Rahmen der elektrischen Heizeinrichtung und beispielsweise einem Gehäuse einer Aufnahme mittels der Sicherungsmittel oder der Rastmittel gedämpft werden.

Eine elektrische Heizeinrichtung kann aus einer Aufnahme, in welcher der Rahmen der elektrischen Heizeinrichtung eingerastet ist, wieder problemlos entnommen werden, beispielsweise zu Servicezwecken, wenn die Sicherungsmittel oder die axial wirkenden Rastmittel Mittel zum Lösen einer Rastverbindung aufweisen. Beispielsweise kann mit den Mitteln zum Lösen eine Verzahnung zwischen Rastmitteln der Sicherungsmittel und einer Gegenstruktur wieder aufgehoben werden. Die Mittel zum Lösen können hierfür beispielsweise an den Sicherungsmitteln angeordnet sein.

Sicherungsmittel und/oder die axial wirkenden Rastmittel sind vorzugsweise einem Ende der elektrischen Heizeinrichtung angeordnet, an welchem elektrische Anschlussstecker und/oder eine elektrische Regeleinrichtung zum Regeln der elektrischen Heizeinrichtung vorgesehen sind.

Um die beschriebenen Sicherungsmittel bzw. die beschriebenen axial wirkenden Rastmittel mit dem Rahmen der elektrischen Heizeinrichtung gemeinsam vorteilhaft ausbilden zu können, können sowohl der Rahmen als auch die Sicherungsmittel bzw. die axial wirkenden Rastmittel vorzugsweise aus einem Kunststoff hergestellt sein. Als Kunststoff wird beispielsweise ein Polypropylen (PP) oder ein Polyamid (PA) eingesetzt. Vorteilhafter Weise können die Sicherungsmittel bzw. die axial wirkenden Rastmittel an dem Rahmen angespritzt sein. Allein schon aus diesem Grund wird die Aufgabe der Erfindung auch von einem Verfahren zum Herstellen eines Rahmens einer elektrischen Heizeinrichtung für ein Heizungssystem eines Kraftfahrzeuges gelöst, bei welchem Sicherungsmittel und insbesondere Rastmittel zum Einrasten an einer Gegenstruktur einer Aufnahme für die elektrische Heizeinrichtung an dem Rahmen der elektrischen Heizeinrichtung angespritzt werden. Hierdurch sind die Sicherungsmittel bzw. die Rastmittel verliersicher immer an dem Rahmen vorhanden.

Gemäß einer weiteren bevorzugten Ausführungsform umfassen die Sicherungsmittel ein Bajonettverschlusssystem. Somit kann die elektrische Heizeinrichtung auf besonders einfache und effektive Art und Weise beispielsweise in einer Klimaanlage eines Kraftfahrzeugs befestigt werden, ohne dass eine zusätzliche Verschraubung notwendig ist. Auch andere Befestigungsmittel, die üblicherweise bei der Montage der elektrischen Heizeinrichtung in der Klimaanlage verwendet werden, wie z. B. Niete, flanschartige Bauteile oder Kuststoffclipse sind überflüssig. Der Wegfall des Erfordernisses der Verschraubung sieht vorteilhafter Weise eine deutliche Kosten- und auch Zeitersparnis bei der Montage vor.

Gemäß noch einer weiteren bevorzugten Ausführungsform umfassen die Sicherungsmittel zumindest eine an dem Rahmen ausgebildete Führungsschiene und/oder zumindest eine an dem Rahmen ausgebildete Keilrippe, welche keilförmig ausgebildet sind. Vorzugsweise wird beim Einschieben der elektrischen Heizeinrichtung in den hierfür vorgesehenen Einbauschacht die Führungsschiene mit zumindest einem Haken, insbesondere mit drei Haken, und die Keilrippe mit zumindest einer Rippe, insbesondere mit drei Rippen, in Verbindung gebracht. Da die Führungsschiene und die Keilrippe keilförmig ausgebildet sind, wird die elektrische Heizeinrichtung im rechten Winkel zu der Einführrichtung mit einer Querkraft beaufschlagt. Diese Kraft drückt die elektrische Heizeinrichtung an das Klimagerät und stellt darüber hinaus eine luftdichte Verbindung her. Die Führungsschiene dient vorzugsweise nicht nur zur Abdichtung sondern auch zur Lagefixierung beim Einführen der elektrischen Heizeinrichtung.

Vorzugsweise wird der Einbauschacht, nachdem die elektrische Heizeinrichtung eingeführt worden ist, durch die Nut an einem Verteilergehäuse verschlossen und somit wird ein Herausrutschen verhindert.

Darüber hinaus wird ein Verfahren zum Montieren einer elektrischen Heizeinrichtung an einem Gehäuse eines Heizungssystems eines Kraftfahrzeuges, bei welchem ein Rahmen der elektrischen Heizeinrichtung in eine Einschuböffnung des Gehäuses eingeschoben wird, wobei der Rahmen während einer Einschubbewegung an dem Gehäuse einrastet und befestigt wird, bereitgestellt.

Weitere Vorteile, Ziele und Eigenschaften vorliegender Erfindung werden anhand nachfolgender Beschreibung anliegender Zeichnung erläutert, in welcher beispielhaft ein Klimaanlagengehäuse mit einer Aufnahme für eine elektrische Heizeinrichtung mit einem Rahmen sowie verschieden ausgebildete Mittel zum Sichern gegen ein unbeabsichtigte Lösen des Rahmens von der Aufnahme dargestellt sind. Komponenten, welche in den Figuren wenigstens im Wesentlichen hinsichtlich ihrer Funktion übereinstimmen, können hierbei mit gleichen Bezugsziffern gekennzeichnet sein, wobei diese Komponenten nicht in allen Figuren beziffert und erläutert sein müssen.

Es zeigt
- Figur 1: schematisch eine Ansicht einer Klimaanlage mit einem Gehäuse, in welchem eine Aufnahme zum Halten und Befestigen eines Rahmens einer elektrischen Heizeinrichtung vorgesehen ist,
- Figur 2: schematisch eine Ansicht einer elektrischen Heizeinrichtung mit PTC-Heizelementen und mit einem Rahmen, an welchem Sicherungsmittel gegen ein unbeabsichtigtes Lösen von einer Aufnahme herstellerseitig angeordnet sind,
- Figur 3: schematisch eine Detailansicht eines ersten Endes der elektrischen Heizeinrichtung aus der Figur 2, an welchem eine Regeleinheit für die PTC-Heizelemente angeordnet ist,
- Figur 4: schematisch eine Ansicht des ersten Endes der elektrischen Heizeinrichtung aus den Figuren 2 und 3 von unten auf die Sicherungsmittel,
- Figur 5: schematisch eine Ansicht einer Schmalseite der elektrischen Heizeinrichtung aus den Figuren 2 bis 4,
- Figur 6: schematisch eine Ansicht einer elektrischen Heizeinrichtung mit PTC-Heizelementen und mit einem alternativen Rahmen, in welchem Sicherungsmittel gegen ein unbeabsichtigtes Lösen von einer Aufnahme herstellerseitig integriert sind,
- Figur 7: schematisch eine Detailansicht der in dem Rahmen integrierten Sicherungsmittel aus der Figur 6,
- Figur 8: schematisch eine Ansicht einer ersten Ausführungsvariante von Rastmitteln, welche an einem Rahmenflügel herstellerseitig angeordnet sind,
- Figur 9: schematisch eine Ansicht der Rastmittel nach der ersten Ausführungsvariante aus der Figur 8, wenn die Rastmittel in einer Rahmenwand herstellerseitig integriert sind,
- Figur 10: schematisch eine Ansicht einer alternativen Ausführungsvariante von Rastmitteln, welche an einem Rahmenflügel herstellerseitig angeordnet sind,
- Figur 11: schematisch eine Ansicht der Rastmittel nach der alternativen Ausführungsvariante aus der Figur 10, wenn die Rastmittel in einer Rahmenwand herstellerseitig integriert sind,
- Figur 12: schematisch eine Ansicht einer weiteren Ausführungsvariante von Rastmitteln, welche an einem Rahmenflügel herstellerseitig angeordnet sind,
- Figur 13: schematisch eine Ansicht der Rastmittel nach der weiteren Ausführungsvariante aus der Figur 12, wenn die Rastmittel wieder in einer Rahmenwand herstellerseitig integriert sind,
- Figur 14: schematisch eine Ansicht einer weiteren elektrischen Heizeinrichtung mit PTC-Heizelementen und mit einem Rahmen, an welchem Sicherungsmittel herstellerseitig angeordnet sind, und die Sicherungsmittel Mittel zum Lösen einer Rastverbindung umfassen,
- Figur 15: schematisch eine perspektivische Ansicht einer Kopfseite der weiteren elektrischen Heizeinrichtung aus der Figur 14, an welchem die Sicherungsmittel herstellerseitig angeordnet sind,
- Figur 16: schematisch eine Detailansicht des Sicherungsmittels aus den Figuren 14 und 15 entlang des Schnittes A-A aus der Figur 14,
- Figur 17: schematisch einen Längsschnitt der weiteren elektrischen Heizeinrichtung aus den Figuren 14 bis 16, insbesondere in dem elektrischen Anschlussbereich der weiteren elektrischen Heizeinrichtung,
- Figur 18: schematisch eine Detailansicht des Längsschnittes aus der Figur 17 im Bereich der herstellerseitig angeordneten Sicherungsmittel,
- Figur 19: schematisch eine perspektivische Ansicht einer elektrischen Heizeinrichtung mit PTC-Heizelementen und einem alternativ ausgebildeten Rahmen, an welchem eine Gegenstruktur eines Sicherungsmittels herstellerseitig angeordnet ist,
- Figur 20: schematisch eine Detailansicht desjenigen Endes des Rahmens, an welchem die Gegenstruktur herstellerseitig angeordnet ist,
- Figur 21: schematisch eine Ansicht einer Einschuböffnung einer Aufnahme für die elektrische Heizeinrichtung an einem Klimaanlagengehäuse,
- Figur 22: schematisch eine Teilansicht der in die Aufnahme aus der Figur 21 eingeschobenen und befestigten elektrischen Heizeinrichtung aus den Figuren 19 und 20, wobei die Sicherungsmittel an der Gegenstruktur eingerastet sind,

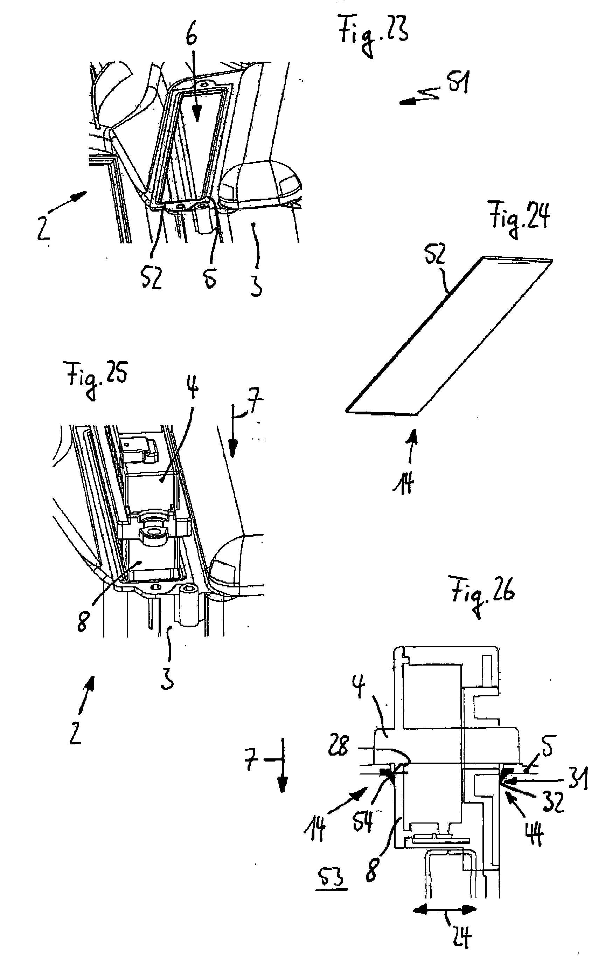

- Figur 23: schematisch eine perspektivische Ansicht einer Einschuböffnung einer Aufnahme für eine elektrische Heizeinrichtung an einem Klimaanlagengehäuse, wobei um die Einschuböffnung herum ein geschlossen umlaufendes Sicherungsmittel an der Aufnahme angeordnet ist,
- Figur 24: schematisch eine perspektivische Einzelansicht des Sicherungsmittels aus der Figur 23,
- Figur 25: schematisch eine weitere perspektivische Ansicht der Einschuböffnung aus der Figur 23 mit einem teilweise in die Einschuböffnung eingeschobenen Rahmen einer elektrischen Heizeinrichtung,
- Figur 26: schematisch einen Längsschnitt der Aufnahme aus den Figuren 23 und 25 im Bereich der Einschuböffnung mit der eingeschobenen elektrischen Heizeinrichtung;
- Figur 27: eine perspektivische Ansicht eines Rahmens, an welchem Sicherungsmittel gegen ein unbeabsichtigtes Lösen von einer Aufnahme vorgesehen sind;
- Figur 28: eine weitere perspektivische Ansicht eines Rahmens, an welchem Sicherungsmittel gegen ein unbeabsichtigtes Lösen von der Aufnahme vorgesehen sind;
- Figur 29: eine perspektivische Ansicht eines Bajonettverschlusssystems;
- Figur 30: eine Draufsicht auf das Bajonettverschlusssystem;
- Figur 31: eine perspektivische Ansicht einer Komponente des Bajonettverschlusssystems;
- Figur 32: eine Vorderansicht eines Ausschnitts einer Klimaanlage;
- Figur 33: einen Schnitt durch eine Keilrippe entlang der Linie A-A in Fig. 1;
- Figur 34: einen Schnitt durch eine Führungsschiene entlang der Linie B-B in Fig. 1,
- Figur 35: eine perspektivische Ansicht eines Teils eines Einbauschachts in der Klimaanlage;
- Figur 36: eine perspektivische Ansicht eines Teils einer elektrischen Heizeinrichtung;
- Figur 37: eine perspektivische Ansicht eines Teils der Klimaanlage;
- Figur 38: den fertig montierten Zustand der elektrischen Heizeinrichtung in der Klimaanlage.
- Figur 39: und Figur 40 zwei perspektivische Ansichten eines Ausführungsbeispiels gemäß vorliegender Erfindung.
- Figur 41: und Figur 42 und Figur 43 drei perspektivische Ansichten eines Ausführungsbeispiels gemäß vorliegender Erfindung.

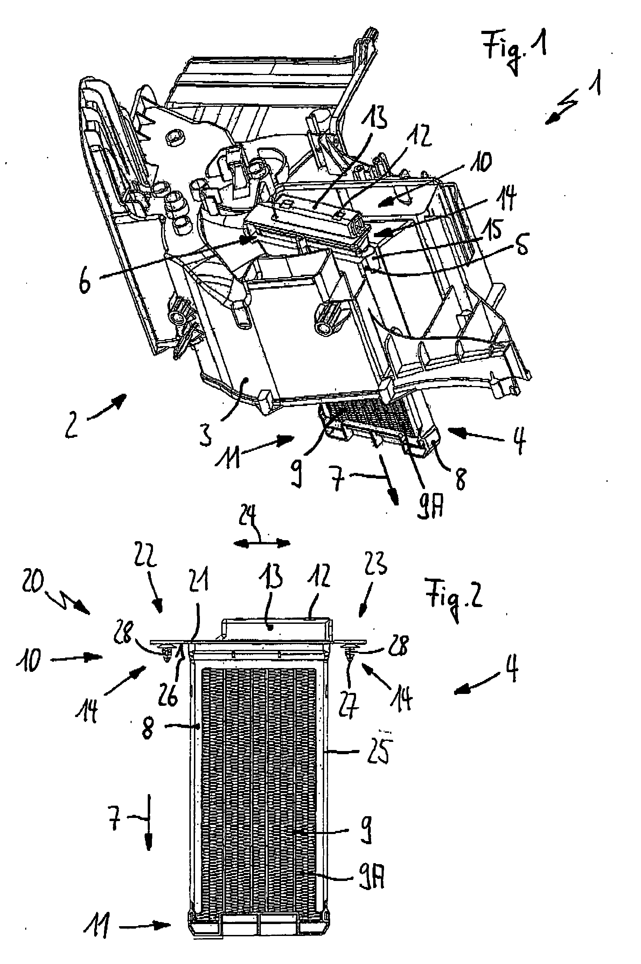

Das in der Figur 1 gezeigte Heizungssystem 1 umfasst eine Klimaanlage 2 mit einem Gehäuse 3, in welchem unter anderem ein hier nicht näher gezeigter Wärmetauscher eines Kühlkreislaufes einer Brennkraftmaschine eines Kraftfahrzeuges untergebracht ist, so dass die Wärmeabgabe des Wärmetauschers unmittelbar in das Heizungssystem 1 geleitet werden kann, sobald die Brennkraftmaschine genügend Wärmeenergie in den Kühlkreislauf abgibt. Für den Fall, dass nicht genügend Wärmeenergie von dem Wärmetauscher abgegeben werden kann, ist die Klimaanlage 2 noch mit einer elektrischen Heizeinrichtung 4 ausgestattet, welche bei Bedarf als Zuheizer des Heizungssystems 1 aktiviert werden kann.

Die elektrische Heizeinrichtung 4 ist in einer Aufnahme 5 angeordnet, welche von dem Gehäuse 3 der Klimaanlage 2 gebildet ist. Somit sind die Klimaanlage 2 und die Aufnahme 5 aus einem gemeinsamen Gehäuse, wenn auch mit verschiedenen Bereichen, gebildet. Die Aufnahme 5 weist eine Einschuböffnung 6 auf, in welche die elektrische Heizeinrichtung 4 in Einschubrichtung 7 axial eingeschoben werden kann. Nach der Darstellung der Figur 1 ist die elektrische Heizeinrichtung 4 noch nicht vollständig in die Aufnahme 5 eingeschoben dargestellt.

Die elektrische Heizeinrichtung 4 weist einen Rahmen 8 auf, in welchem eine Vielzahl an elektrischen PTC-Heizelementen 9 eingelegt und fixiert sind. Zwischen den einzelnen PTC-Heizelementen 9 sind jeweils Heizrippen 9A vorgesehen, um eine verbesserte Wärmeabgabe an der elektrischen Heizeinrichtung 4 zu erzielen. Um die elektrischen PTGHeizelemente 9 mit Elektrizität versorgen zu können, umfasst die elektrische Heizeinrichtung 4 an einem ersten axialen Ende 10 ihrer beiden axialen Enden 10 und 11 elektrische Anschlusseinrichtungen 12, die in einem Anschlussgehäuse 13 untergebracht sind. Das erste axiale Ende 10 beschreibt hierbei ein Kopfende des Rahmens 8.

Damit die vollständig in die Aufnahme 5 eingeschobene elektrische Heizeirichtung 4 sich bei einer ordnungsgemäßen Montage nicht unbeabsichtigt aus der Aufnahme 5 lösen und sich entgegen der Einschubrichtung 7 bewegen kann, wirken zwischen dem Rahmen 8 und der Aufnahme 5 Sicherungsmittel 14 (in der Darstellung nach der Figur 1 noch verdeckt), welche die elektrische Heizeinrichtung 4 in bzw. an der Aufnahme 5 fixieren. Die Sicherungsmittel 14 sind hierbei bereits herstellerseitig ein Bestandteil des Rahmens 8, wodurch sie zum einen verliersicher an dem Rahmen angeordnet sind, so dass sie bei einer Montage der elektrischen Heizeinrichtung 4 an der Aufnahme 5 immer zur Verfügung stehen. Zum anderen kann eine Montagearbeit schneller vorgenommen werden, da zusätzliches Befestigungsmaterial zum Befestigen der elektrischen Heizeinrichtung 4 in bzw. an der Auf nahme 5 nicht gebraucht wird. Sind die Sicherungsmittel 14 bereits herstellerseitig ein Bestandteil des Rahmens 8, sind an der Aufnahme 5 nur noch geeignete Gegenstrukturen 15 erforderlich, mit welchen die Sicherungsmittel 14 wechselwirken können. Beispielsweise rasten die Sicherungsmittel 14 in die Gegenstrukturen 15 ein, so dass eine Bewegung der elektrischen Heizeinrichtung 4 entgegen der Einschubrichtung 7 unbeabsichtigt nicht mehr möglich ist.

Ausführungsbespiele von ersten möglich gestalteten Sicherungsmitteln 14 sind in den nachfolgenden Figuren ausführlich beschrieben.

Bei dem in den Figuren 2 bis 5 beschriebenen ersten Ausführungsbeispiel 20 umfasst die elektrische Heizeinrichtung 4 eine Vielzahl an elektrischen PTC-Heizelementen 9, die in einem Rahmen 8 der elektrischen Heizeinrichtung 4 eingelegt sind. Der Rahmen 8 hat an seinem ersten axialen Ende 10 ein Anschlussgehäuse 13 mit elektrischen Anschlusseinrichtungen 12, wobei in dem Anschlussgehäuse 13 des Ausführungsbeispiels 20 auch eine Regeleinheit (hier nicht gezeigt) angeordnet ist, mittels welcher die elektrischen PTC-Heizelemente 9 in ihrer Funktion geregelt bzw. gesteuert werden können. An dem ersten Ende 10 weist der Rahmen 8 eine Abschlusseinrichtung 21 auf, die mit einem ersten Rahmenflügel 22 und einem zweiten Rahmenflügel 23 radial 24 über eine längliche Schmalseite 25 der elektrischen Heizeinrichtung 4 hinaus ragt. Die Sicherungsmittel 14 können somit neben dem eigentlichen Rahmen 8 an der elektrischen Heizeinrichtung 4 platziert werden. Der erste Rahmenflügel 22 weist Sicherungsmittel 14 auf, welche an einer den PTC-Heizelementen 9 zugewandten Seite 26 der Abschlusseinrichtung 21 angeordnet sind. Die Sicherungsmittel 14 zeigen hierbei mit einer Positionierspitze 27 (nur exemplarisch eingezeichnet) in Einschubrichtung 7, so dass die Sicherungsmittel 14 leichter in Gegenstrukturen 15 (siehe Figur 1) einer Aufnahme 5 für die elektrische Heizeinrichtung 4 einfädeln können. Der zweite Rahmenflügel 23 ist identisch ausgebildet und umfasst ebenfalls Sicherungsmittel 14. Die an den Rahmenflügeln 22 und 23 angeordneten Sicherungsmittel 14 sind als axial wirkende Rastmittel 28 gestaltet, die in die Gegenstrukturen 15 einrasten können. Hierdurch kann die elektrische Heizeinrichtung 4 besonders einfach in bzw. an der Aufnahme 5 befestigt werden.

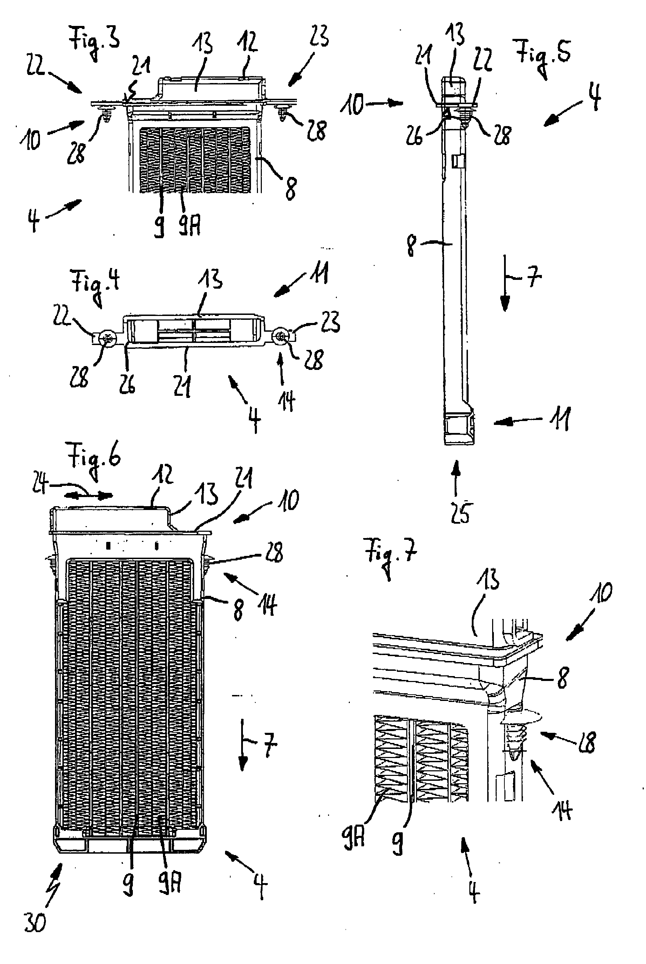

Bei dem in den Figuren 6 und 7 gezeigten zweiten Ausführungsbeispiel 30 einer elektrischen Heizeinrichtung 4 mit einem alternativ gestalteten Rahmen 8 sind Sicherungsmittel 14 beidseits der Schmalseite 25 in dem Rahmen 8 integriert, wodurch eine Bauraum sparende und kompakte elektrische Heizeinrichtung 4 realisiert werden kann. Deshalb steht auch eine Abschlusseinrichtung 21 nicht wesentlich radial 24 über die Schmalseite 25 der elektrischen Heizeinrichtung 4. Die Sicherungsmittel 14 sind auch in diesem Ausführungsbeispiel 30 in einem Bereich eines ersten Endes 10 der elektrischen Heizeinrichtung 4 angeordnet, in welchem ebenfalls ein Anschlussgehäuse 13 mit elektrischen Anschlusseinrichtungen 12 vorgesehen ist. Die Sicherungsmittel 14 umfassen auch hier axial wirkende Rastmittel 28, welche mit einer geeigneten Gegenstruktur 15 an einer Aufnahme 5 verrasten können.

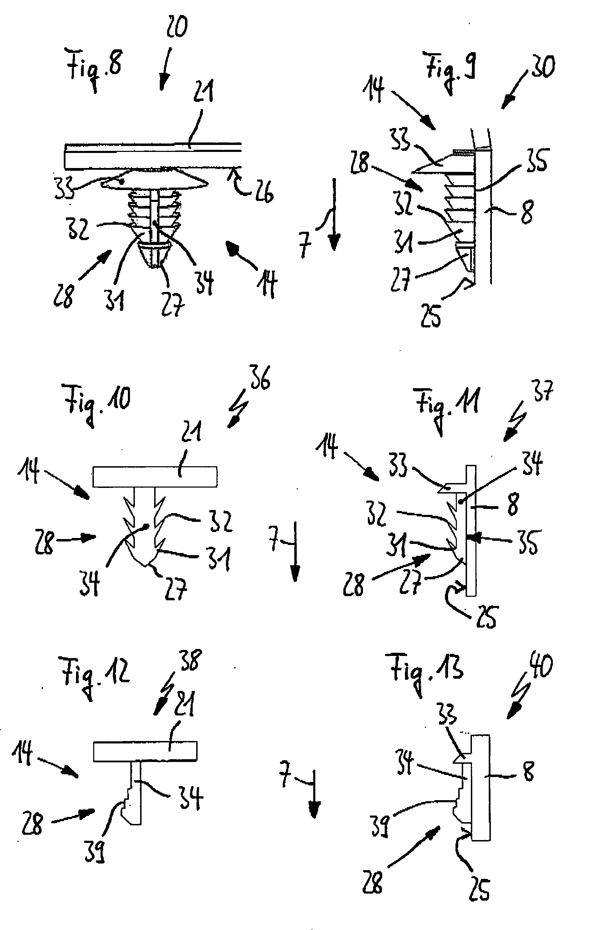

In den Figuren 8 bis 13 sind detailiert Ausführungsbeispiele zu möglichen Sicherungsmitteln 14 ausführlich beschrieben.

Die in der Figur 8 gezeigten und an der Abschlusseinrichtung 21 befestigten Sicherungsmittel 14 sind dem zuvor beschriebenen Ausführungsbeispiel 20 zuzuordnen, wobei die axial wirkenden Rastmittel 28 der Sicherungsmittel 14 halbkonisch ausgebildete Rasthaken 31 umfassen, die mit ihren freien Enden 32 in die axiale Einschubrichtung 7 des Rahmens 8 (siehe Figur 2) ausgerichtet sind. Hierdurch kann besonders gut, eine Rückbewegung einer ordnungsgemäß montierten elektrischen Heizeinrichtung 4 entgegen der axialen Einschubrichtung 7 verhindert werden. Gut zu erkennen ist die Positionierspitze 27 der Sicherungsmittel 14. Um zu unterbinden, dass die Rastmittel 28 zu weit in Gegenstrukturen 15 eintauchen können, umfassen die Sicherungsmittel 14 einen Sicherheitsanschlag 33, der zwischen der Abschlusseinrichtung 21 und den Rastmitteln 28 vorgesehen ist. Die einzelnen Rasthaken 31 sind an einem länglichen Haltekörper 34 hintereinander angeordnet.

Die in der Figur 9 gezeigten und an der Schmalseite 25 des Rahmens 8 befestigten Sicherungsmittel 14 sind dem zuvor beschriebenen Ausführungsbeispiel 30 zuzuordnen, wobei die Rastmittel 28 direkt an einer Rahmenwandung 35 angespritzt sind. Die Rastmittel 28 verfügen über halbkonisch ausgebildete Rasthaken 31, die mit ihren freien Enden 32 in die axiale Einschubrichtung 7 des Rahmens 8 (siehe Figur 6) ausgerichtet sind. Die Rastmittel 28 besitzen sowohl eine Positionierspitze 27 als auch einen Anschlag 33.

Bei einem anderen Ausführungsbeispiel 36 hinsichtlich alternativer Sicherungsmittel 14 sind die Rastmittel 28 in einem Sägezahn-Design ausgebildet, wobei auch hierbei die Rastmittel 28 Rasthaken 31 umfassen, die mit ihren freien Enden 32 entgegen einer Einschubrichtung 7 eines Rahmens 8 ausgerichtet sind. Die Sicherungsmittel 14 haben einen länglichen Haltekörper 34, der an einer Abschlusseinrichtung 21 des Rahmens 8 angespritzt ist, wobei die Rastmittel 28 an dem länglichen Haltkörper 34 in Position gehalten werden. Der Haltekörper 34 zeigt mit einer Positionierspitze 27 der Sicherungsmittel 14 in Einschubrichtung 7.

Hinsichtlich eines Ausführungsbeispiels 37 weiteren Sicherungsmittel 14 ist das vorstehend beschriebene Sägezahn-Design an einer Rahmenwandung 35 einer Schmalseite 25 eines Rahmens 8 angespritzt. An seinem einer Positionierspitze 27 abgewandten Ende eines länglichen Haltekörpers 34 ist ein Anschlag 33 platziert. Im Wesentlichen sind die Sicherungsmittel 14 nach dem Ausführungsbeispiel 36 hinsichtlich des Ausführungsbeispiels 37 der Länge nach halbiert.

Bei einem weiteren Ausführungsbeispiel 38 sind gattungsgemäße Sicherungsmittel 14 in einem Stufen-Design ausgebildet, wobei einzelne Stufen 39 des Stufen-Designs an einem länglichen Haltekörper 34 vorgesehen sind, der an einer Abschlusseinrichtung 21 eines Rahmes 8 angespritzt ist.

Das Stufen-Design ist in einem zusätzlichen Ausführungsbeispiel 40 in einer Rahmenwandung 35 eines Rahmens 8 integriert, wobei oberhalb eines länglichen Haltekörpers 34 wieder ein Anschlag 33 vorgesehen ist. An den einzelnen Stufen 39 können Nasen (hier nicht gezeigt) einer geeigneten Gegenstruktur 15 einrasten.

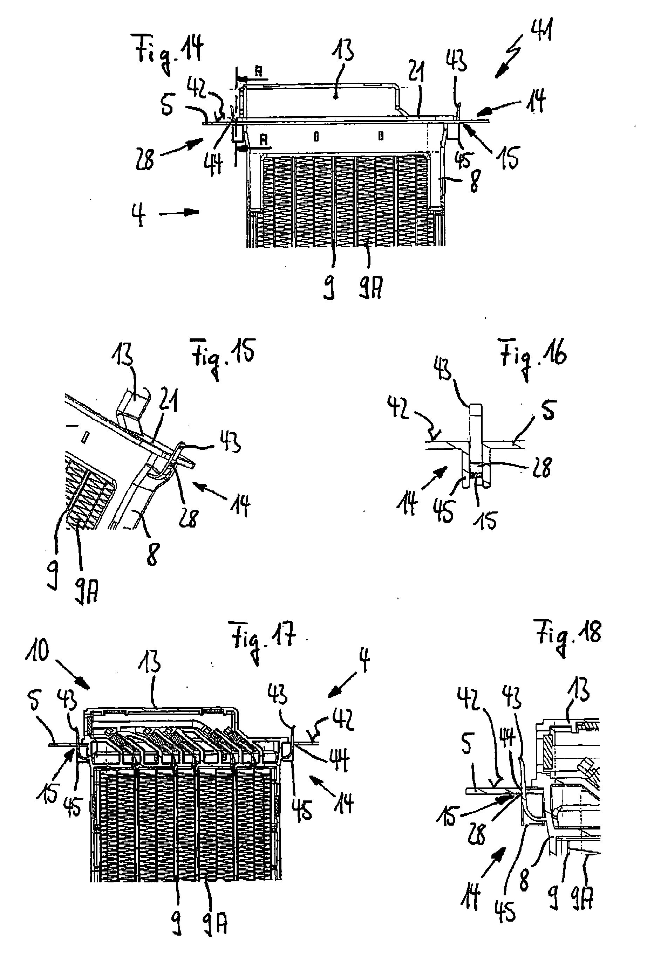

Ein in den Figuren 14 bis 18 weiteres illustriertes Ausführungsbeispiel 41 zeigt zumindest teilweise eine elektrische Heizeinrichtung 4, welche PTC-Heizelemente 9 und Heizrippen 9A umfasst, die in einem Rahmen 8 der elektrischen Heizeinrichtung 4 gelagert sind. In einem Bereich eines ersten Endes 10 (Kopfende) der elektrischen Heizeinrichtung 4 sind Sicherungsmittel 14 (siehe insbesondere Figur 15) an dem Rahmen 8 angeordnet. Die Sicherungsmittel 14 stehen sowohl radial 24 als auch axial 7 über eine Abschlusseinrichtung 21 des Rahmens hervor, so dass sie bis neben einem Anschlussgehäuses 13 der elektrischen Heizeinrichtung 4 reichen. Ist die elektrische Heizeinrichtung 4 ordnungsgemäß in einer Aufnahme 5 eingeschoben, können die Sicherungsmittel 14 vorteilhafter Weise über eine Aufnahmeaußenfläche 42 hinaus ragen und manuell bedient werden. Hierzu umfassen die Sicherungsmittel 14 Mittel 43 zum Lösen einer Rastverbindung 44, so dass Rastmittel 28 der Sicherungsmittel 14 von Gegenstrukturen 15 der Aufnahme 5 gelöst werden können, wodurch die elektrische Heizeinrichtung 4, beispielsweise zu Servicezwecken, wieder aus der Ausnahme heraus genommen werden kann. Damit im Bereich der Rastverbindungen 44 keine erwärmte Luft aus einem Heizungssystem 1 entweichen kann, umfasst die Aufnahme 5 im Bereich der Gegenstrukturen 15 Einhausungen 45, in welche die Sicherungsmittel 14 eintauchen können, wenn die elektrische Heizeinrichtung 4 in die Aufnahme 5 eingeschoben wird.

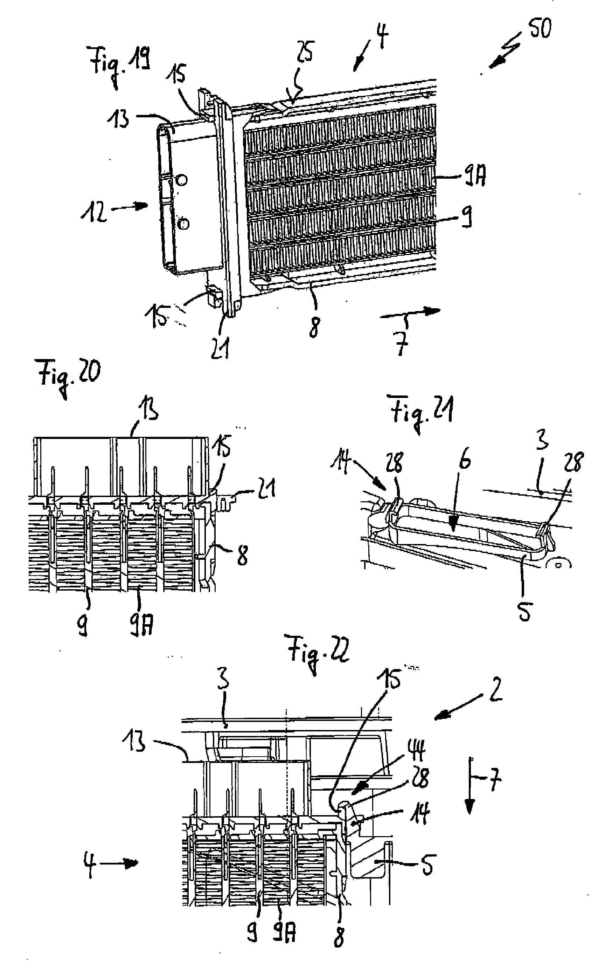

Nach dem Ausführungsbeispiel 50 hinsichtlich der Figuren 19 bis 22 weist eine diesbezüglich vorgestellte elektrische Heizeinrichtung 4 einen Rahmen 8 zum Halten von elektrischen PTC-Elementen 9 und Heizrippen 9A auf. Der Rahmen 8 weist an seinem ersten Ende 10, der Kopfseite der elektrischen Heizeinrichtung 4, eine Abschlusseinrichtung 21 und ein Anschlussgehäuse 13 für elektrische Anschlusseinrichtungen 12 der elektrischen Heizeinrichtung 4 auf. Seitlich neben dem Anschlussgehäuse 13 an den länglichen Schmalseiten 25 der elektrischen Heizeinrichtung 4 befinden sich rahmenseitige Gegenstrukturen 15, an welchen Sicherungsmittel 14, die nach dem Ausführungsbeispiel 50 an einer Aufnahme 5 eines Gehäuses 2 einer Klimaanlage 2 vorgesehen sind, mit ihren Rastmitteln 28 einrasten können. Auch hierdurch kann baulich besonders einfach eine betriebssichere Rastverbindung 44 zwischen einer elektrischen Heizeinrichtung 4 und einer Aufnahme 5 hergestellt werden, wobei die Sicherungsmittel 14 hierbei ein Bestandteil der Aufnahme 5 und somit auch verliersicher an der Aufnahme 5 befestigt sind.

Bei einem nächsten Ausführungsbeispiel 51 sind Sicherungsmittel 14 umlaufend an einer Einschuböffnung 6 einer Aufnahme 5 angeordnet. Und zwar sind die Sicherungsmittel 14 als eine Dichtungslippe 52 ausgebildet, die an der Aufnahme 5 angespritzt ist. Es versteht sich, dass die Dichtungslippe 52 auch an die Aufnahme 5 angeklebt werden kann.

Die Sicherungsmittel 14 ragen hierbei in die Einschuböffnung 6 hinein und verkleinern somit den Querschnitt der Einschuböffnung 6, wobei die Sicherungsmittel 14 flexibel sind und sich radial nach außen verlagern können, wenn ein Rahmen 8 einer elektrischen Heizeinrichtung 4 gemäß der Einschubrichtung 7 in die Aufnahme 5 eingeschoben wird. Die Sicherungsmittel 14 sind somit zumindest teilweise in der Einschuböffnung 6 angeordnet, wodurch die Aufnahme 5 sehr platzsparend bereit gestellt werden kann.

Zwischen dem Rahmen 8 und den Sicherungsmitteln 14, in Gestalt der Dichtungslippe 52, bildet sich eine Art Rastverbindung 44, da sich die Sicherungsmittel 14 verstärkt an den Rahmen 8 andrücken, sobald die elektrische Heizeinrichtung 4 entgegen der Einschubrichtung 7 bewegt wird. Somit umfassen die Sicherungsmittel 14 axial wirkende Rastmittel 28, die einen länglichen Rasthaken 31 aufweisen, der einerseits komplett um den eingeschobenen Rahmen 8 herum umläuft und der andererseits mit seinem freien Ende 32 in die Einschubrichtung 7 ausgerichtet ist, so dass die elektrische Heizeinrichtung 4 problemlos in die Aufnahme 5 eingeschoben werden kann, aber umgekehrt sich nicht aus der Aufnahme 5 unbeabslchtigt heraus bewegen kann.

Das freie Ende 32 liegt hierbei linienförmig an dem Rahmen 8 an, und kann somit die Aufnahme 5 luftdicht abdichten, so dass vorteilhafter Weise über die Aufnahme 5 keine Luft aus der Klimaanlage 2 entweichen kann. Zudem wird die Dichtungslippe 52 auf Grund eines innerhalb der Klimaanlage 2 vor liegenden Innendrucks 53 stets gegen den Rahmen 8 der elektrischen Heizeinrichtung 4 gedrückt, so dass für eine besonders gute Dichtigkeit gesorgt ist. Je höher der Innendruck 53 desto stärker wird die Dichtungslippe 52 gegen den Rahmen 8 gedrückt.

Da die Dichtungslippe 52 und damit auch die Sicherungsmittel 14 nach dem Ausführungsbeispiel 50 relativ flexibel ausgebildet ist bzw. sind, können die vorliegenden Sicherungsmittel 14 zugleich auch Aufgaben eines Schwingungsdämpfers übernehmen, Insbesondere Schwingungen radial 24 zur Einschubrichtung 7 können besonders gut gedämpft werden, so dass die Sicherungsmittel 14 kumulativ aber auch alternativ einen Schwingungsdämpfer 54 umfassen.

Darüber hinaus kann auf Grund der umlaufenden Sicherungsmittel 14 auf eine zusätzliche dichtende Nut-Feder-Verbindung zwischen dem Rahmen 8 und der Aufnahme 5 verzichtet werden, da diese Aufgabe vorteilhafter Weise die Sicherungsmittel 14 übernehmen. Hierdurch wird die Aufnahme kleiner.

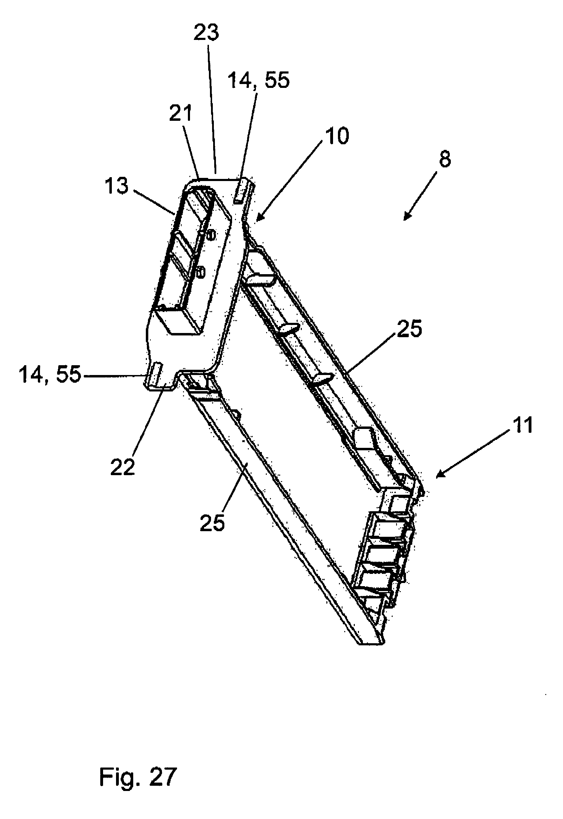

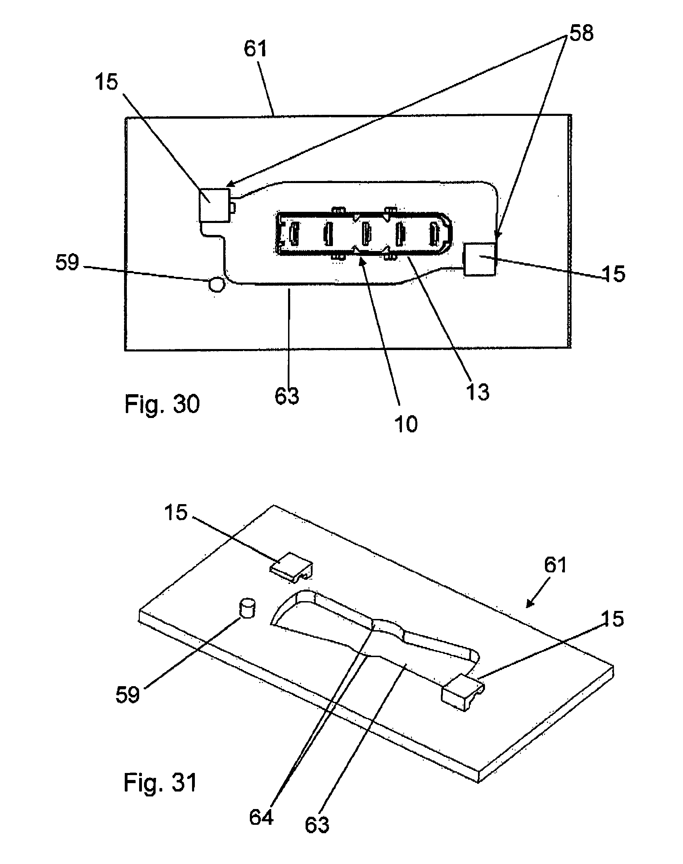

Figur 27 zeigt eine perspektivische Ansicht eines Rahmens 8 gemäß einem weiteren Ausführungsbeispiel, an welchem Sicherungsmittel 14 gegen ein unbeabsichtigtes Lösen von einer Aufnahme vorgesehen sind. Der Rahmen 8 weist wiederum ein erstes axiales Ende 10, an welchem ein Anschlussgehäuse 13 vorgesehen ist, in welches Anschlusseinrichtungen (nicht gezeigt) aufnehmbar sind, und ein zweites axiales Ende 11 auf. An dem ersten axialen Ende 10 weist der Rahmen 8 eine Abschlusseinrichtung 21 auf, die mit einem ersten Rahmenflügel 22 und einem zweiten Rahmenflügel 23 radial über die jeweiligen länglichen Schmalseiten 25 hinaus ragt. Der erste Rahmenflügel 22 weist Sicherungsmittel 14 auf, welche an einer den PTC-Heizelementen (nicht dargestellt) abgewandten Seite der Abschlusseinrichtung 21 angeordnet sind. Der zweite Rahmenflügel 23 ist identisch ausgebildet und umfasst ebenfalls Sicherungsmittel 14. Die Sicherungsmittel 14 wirken mit Gegenstrukturen (nicht dargestellt) zusammen, um eine Fixierung des Rahmens vorzusehen, wie in Zusammenhang mit Figur 30 weiter beschrieben werden wird. In dieser Ausführungsform sind die Sicherungsmittel 14 als Befestigungsrippen 55 ausgebildet, die jeweilig von der den PTC-Elementen (nicht dargestellt) abgewandeten Oberfläche der Abschlusseinrichtung 21 abragen.

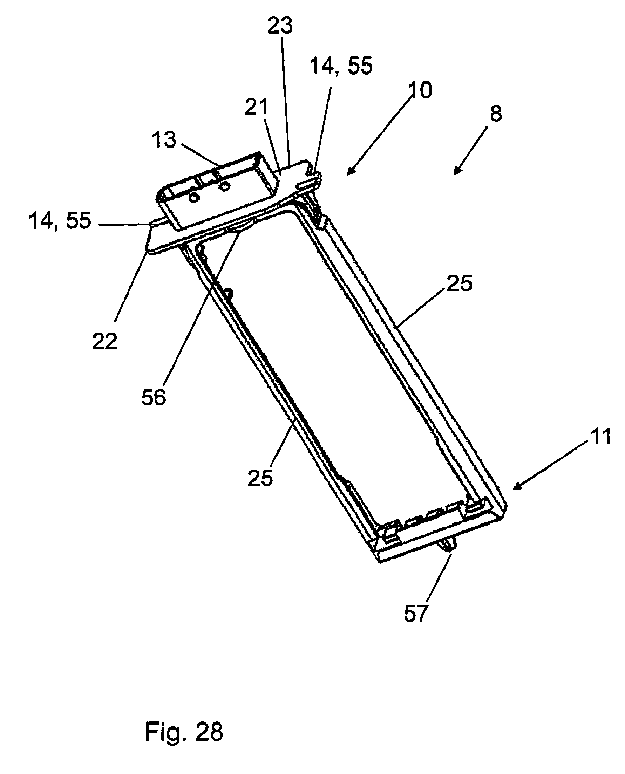

Figur 28 zeigt eine weitere perspektivische Ansicht eines Rahmens 8, an welchem Sicherungsmittel 14 in Form von Befestigungsrippen 55 jeweils an dem ersten Rahmenflügel 22 und dem zweiten Rahmenflügel 23 von der Abschlusseinrichtung 21 abragend vorgesehen sind. In dieser Ausführungsform ist eine obere Dreheinrichtung 56 an dem Rahmen auf der den PTC-Elementen (nicht dargestellt) zugewandten Seite vorgesehen, sowie eine untere Dreheinrichtung 57, die an dem zweiten axialen Ende 12 von dem Rahmen 8 abragt. Die obere Dreheinrichtung 56 ist zylinderförmig ausgebildet, und die untere Dreheinrichtung 57 ist kreuzförmig ausgebildet. Die obere Dreheinrichtung 56 und die untere Dreheinrichtung 57 ermöglichen eine Drehung des Rahmens, so dass die Befestigungsrippen 55 mit entsprechenden Gegenstrukturen in Eingriff gelangen können. Die obere Dreheinrichtung 56 an dem Rahmen 8 wirkt mit einer entsprechend in dem Gehäuse (nicht dargestellt) bzw. in der Aufnahme angeordneten Dreheinrichtung zusammen. Auch die untere Dreheinrichtung 57, welche an dem Rahmen 8 vorgesehen ist, wirkt mit einer entsprechend in der Aufnahme angeordneten Dreheinrichtung zusammen. Die jeweils gehäuseseitig korrespondierenden Dreheinrichtungen sind jeweils formkongruent zu der oberen Dreheinrichtung 56 und der unteren Dreheinrichtung 57 ausgebildet.

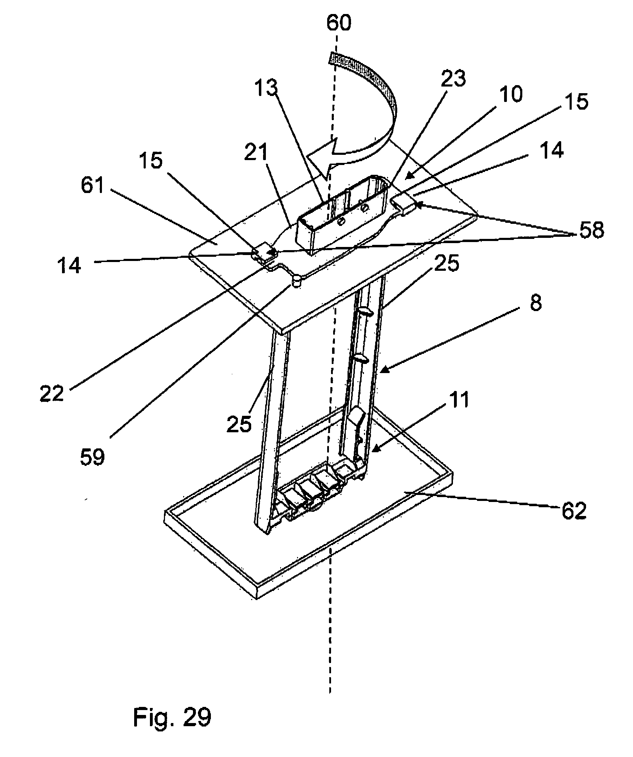

Figur 29 zeigt eine perspektivische Ansicht eines Bajonettverschlusssystems 58, wobei die Sicherungsmittel 14 in Form von Befestigungsrippen 55 mit Gegenstrukturen 15 in Eingriff stehen. Dabei wird der Rahmen 8 um die Drehachse 60 in Richtung des Pfeils gedreht, um die Befestigungsrippen 55 unter die hakenförmig von einer oberen Platte 61, welche beispielsweise in der Aufnahme (nicht dargestellt) vorgesehen ist, abragenden Gegenstrukturen 15 geschoben zu werden. Damit das Gehäuse 8 richtig in der Aufnahme eingesetzt wird, ist darüber hinaus an der oberen Platte 61 eine Poka-Yoke-Einrichtung 59 in Form eines von der Platte abragenden Stifts vorgesehen, der ein falsches Einsetzen des Rahmens 8 in die Aufnahme verhindert. Das erste axiale Ende 10 des Rahmens 8 wird dabei in die obere Platte 61 eingeführt, und das zweite axiale Ende 11 wird in eine entsprechend angeordnete untere Platte 62, welche ebenfalls z. B. in der Aufnahme angeordnet sein kann, eingeführt bzw. darin aufgenommen. Das Gehäuse 8 kann an beiden axialen Enden, d. h. an dem ersten axialen Ende 10 sowie an dem zweiten axialen Ende 11 ein Bajonettverschlusssystem 58 der oben beschriebenen Art aufweisen.

Figur 30 zeigt eine Draufsicht auf das Bajonettverschlusssystem 58 gemäß einer Ausführungsform. Die obere Platte 61, von der die Gegenstrukturen 15 zum Eingriff mit den Befestigungsrippen 55 des Rahmens 8 abragen, weist darüber hinaus eine Öffnung 63 auf, durch welche das erste axiale Ende 10 hindurchschiebbar ist bzw. in welcher der Rahmen 8 gedreht werden kann, um die Sicherungsmittel 14 mit den Gegenstrukturen 15, d. h. um die Befestigungsrippen 55 mit den Gegenstrukturen 15 in Eingriff zu bringen.

Figur 31 zeigt eine perspektivische Ansicht einer Komponente des Bajonettverschlusssystems, nämlich der oberen Platte 61, welche die zwei hakenförmigen Gegenstrukturen 15, die Poka-Yoke-Einrichtung.59 und die Öffnung 63 aufweist. Weiterhin ist die obere Platte 61 mit einer oberen Dreheinrichtung 64 ausgebildet, welche mit der oberen Dreheinrichtung 56, die am Rahmen 8 ausgebildet ist, zusammenwirkt.

Das Bajonettverschlusssystem 58, welches oben in Zusammenhang mit den Figuren 27 bis 31 beschrieben wurde, welches in einer Ausführungsform im Wesentlichen zwei Befestigungsrippen 55, zwei Gegenstrukturen 15, eine obere Dreheinrichtung 56 an dem Rahmen 8, sowie eine damit zusammenwirkende Dreheinrichtung an dem Gehäuse bzw. in der Aufnahme, eine untere Dreheinrichtung 57 an dem Rahmen 8, sowie eine damit zusammenwirkende Dreheinrichtung an dem Gehäuse bzw. in der Aufnahme, eine obere Platte 61 mit einer Öffnung 63 und eine untere Platte 62 mit einer Öffnung 63 aufweist, bietet eine kostengünstige Befestigungslösung der elektrischen Heizeinrichtung 4 in der Klimaanlage 2, bei welcher keine zusätzlichen Elemente und Verfahrensschritte benötigt werden, um die elektrische Heizeinrichtung 4 zu befestigen.

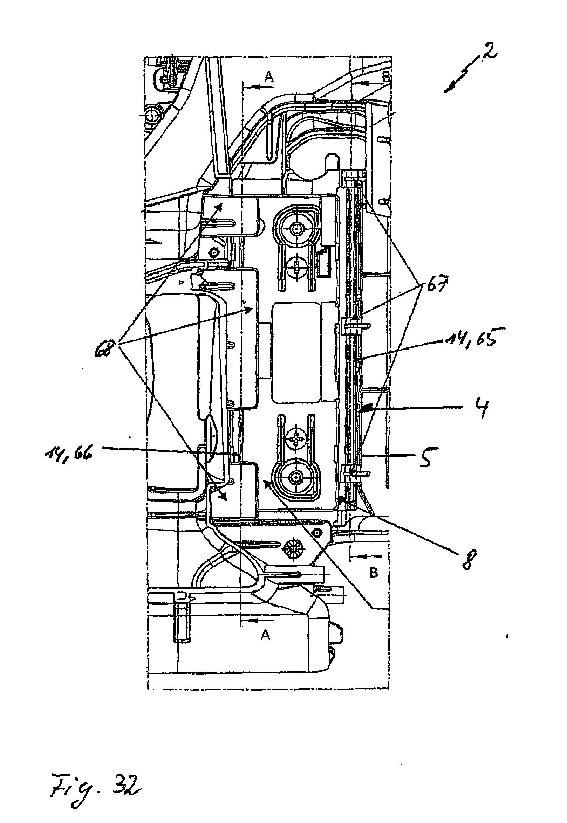

Figur 32 zeigt eine Vorderansicht eines Ausschnitts einer Klimaanlage 2. Gemäß der hier dargestellten Ausführungsform wird die elektrische Heizeinrichtung 4 in den Einbauschacht in Form einer Aufnahme 5 der Klimaanlage 2 von oben eingeschoben. Beim Einschieben werden eine Führungsschiene 65 und eine Keilrippe 66, welche an dem Rahmen 8 der elektrischen Heizeinrichtung 4 vorgesehen bzw. angeformt sind, jeweils mit Haken 67 und Rippen 68, welche an einem Gehäuseteil der Klimaanlage 2 vorgesehen bzw. angeformt sind, in Verbindung gebracht. Da die Sicherungsmittel 14 an der elektrischen Heizeinrichtung 4, nämlich die Keilrippe 66 und die Führungsschiene 65 hierbei keilförmig ausgebildet sind, wird die elektrische Heizeinrichtung 4 rechtwinklig zu der Einführrichtung, welche in diesem Beispiel senkrecht zu der Bildebene ist, mit einer Querkraft beaufschlagt. Diese Kraft drückt die elektrische Heizeinrichtung 4 an die Klimaanlage 2 und stellt eine luftdichte Verbindung her. Die Führungsschiene 65 dient dabei nicht nur zur Abdichtung sondern auch zur Lagefixierung beim Einführen der elektrischen Heizeinrichtung 4.

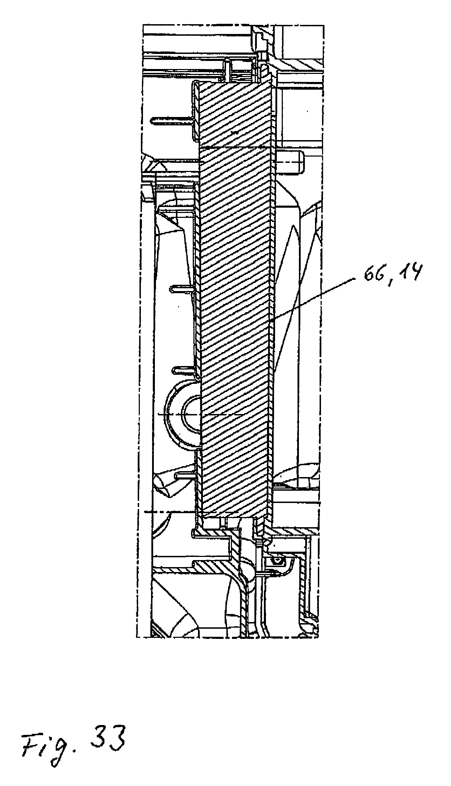

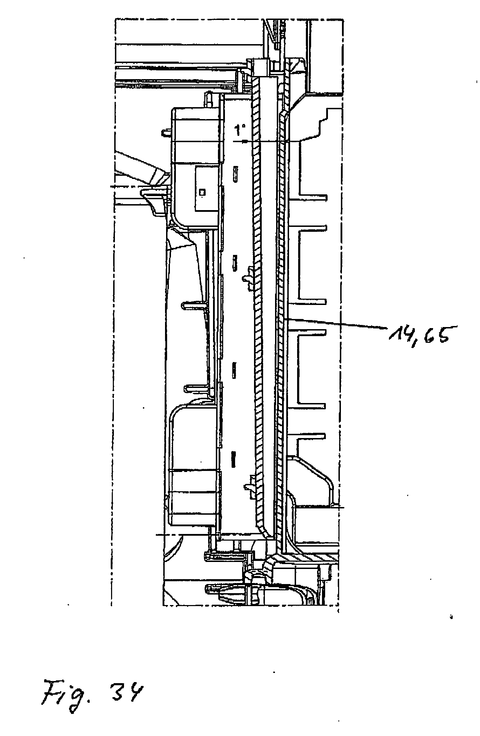

Figur 33 zeigt einen Schnitt durch die Keilrippe 66 entlang der Linie A-A in Fig. 1, und Figur 34 zeigt einen Schnitt durch die Führungsschiene 65 entlang der Linie B-B in Fig. 1, wobei die keilförmige Ausbildung der Elemente verdeutlicht wird, durch welche die Querkraft bewirkt wird.

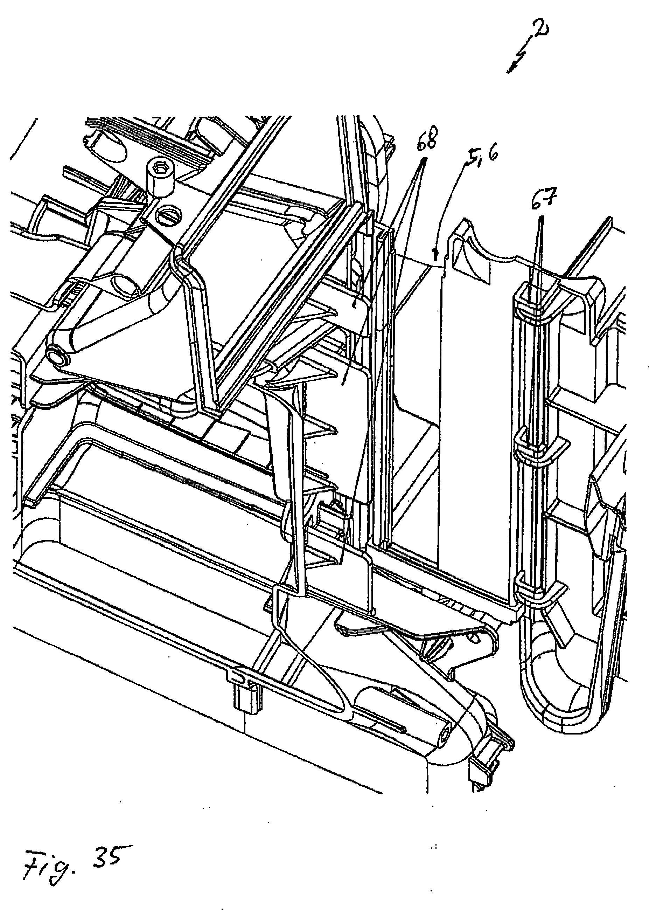

Figur 35 zeigt eine perspektivische Ansicht eines Teils eines Einbauschachts in der Klimaanlage 2, welcher eine mit einer Einschuböffnung 6 versehene Aufnahme 5 aufweist. In die Aufnahme 5 ist die elektrische Heizeinrichtung (nicht dargestellt) einführbar. Die Aufnahme ist an dem Bereich der Einschuböffnung 6 mit drei Haken 67 auf einer Seite der Einschuböffnung 6 ausgebildet, und auf der gegenüberliegenden Seite ist die Aufnahme mit drei Rippen 68 ausgebildet, welche zur Fixierung der elektrischen Heizeinrichtung (nicht dargestellt) in der Aufnahme 5 der Klimaanlage 2 dienen.

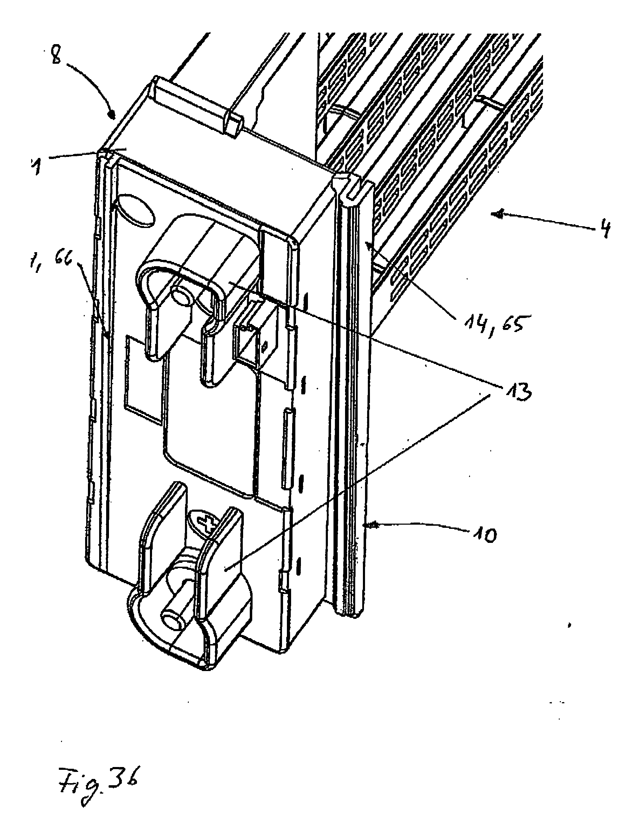

Figur 36 zeigt eine perspektivische Ansicht eines Teils einer elektrischen Heizeinrichtung 4, welche in die Aufnahme (nicht dargestellt) einführbar ist. An dem Rahmen 8 ist an dem ersten axialen Ende 10 eine Abschlusseinrichtung 21 vorgesehen, welche an den jeweiligen Längsseiten Sicherungsmittel 14 aufweist, wobei ein Sicherungsmittel 14 in Form einer keilförmigen Führungsschiene 65 ausgebildet ist und das andere Sicherungsmittel 14, welches an der gegenüberliegenden Längsseite der Abschlusseinrichtung 21 angeordnet ist, in Form einer Keilrippe 66 ausgebildet ist. Weiterhin weist die Abschlusseinrichtung 21 ein Anschlussgehäuse 13 auf.

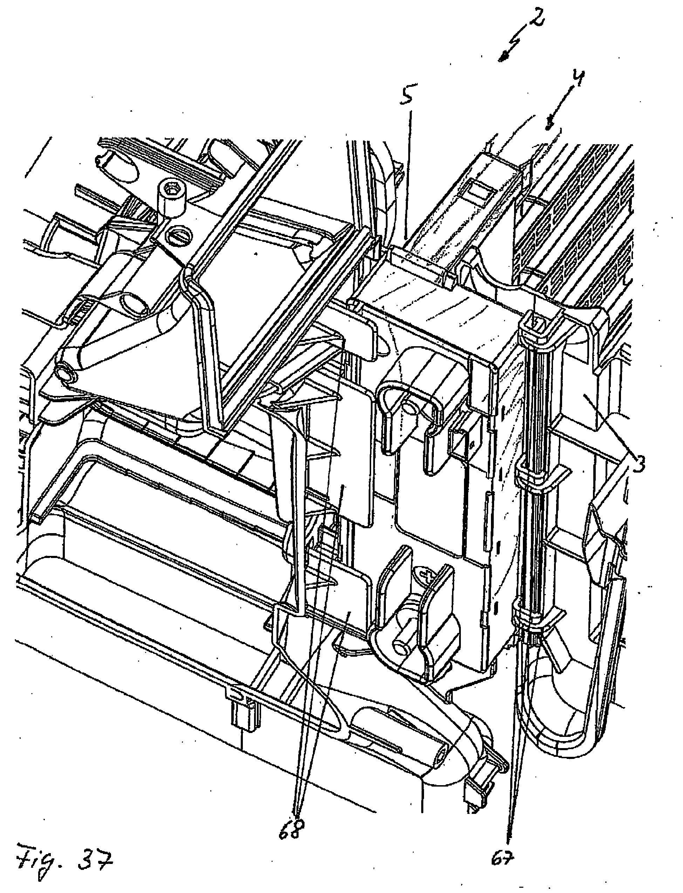

Figur 37 zeigt eine perspektivische Ansicht eines Teils der Klimaanlage 2, wobei die elektrische Heizeinrichtung 4 in die Aufnahme 5 eingesetzt ist. Dabei fixieren drei an der Aufnahme 5 bzw. an dem Gehäuse 3 ausgebildete Haken 67 die Führungsschiene 65 und drei an der Aufnahme 5 bzw. an dem Gehäuse 3 ausgebildete Rippen 68 gegenüberliegend der drei Haken 67 die Keilrippe 66.

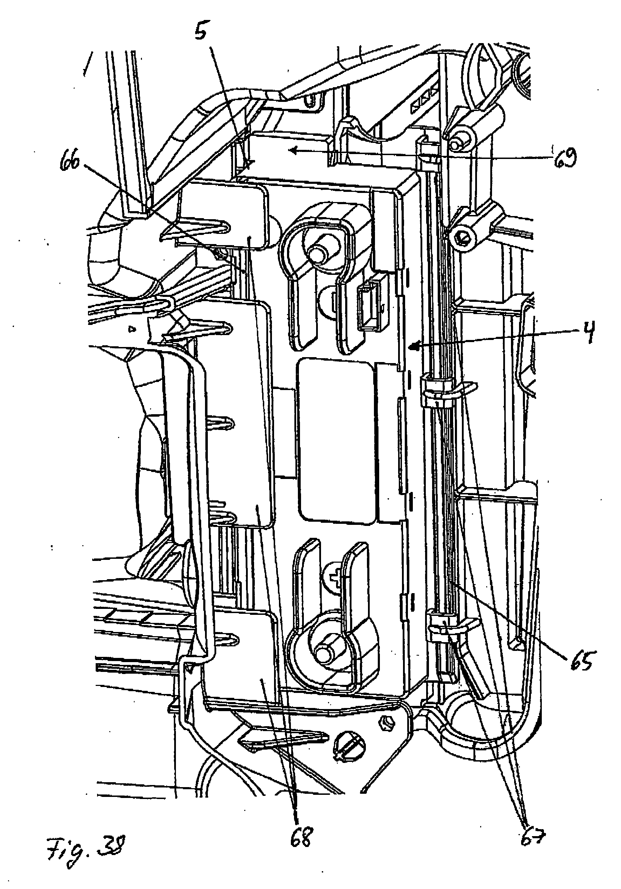

Figur 38 zeigt den fertig montierten Zustand der elektrischen Heizeinrichtung 4 in der Klimaanlage 2, wobei die Haken 67 wiederum die Führungsschiene 65 und die Rippen 68 die Keilrippe 66 fixieren, um die elektrische Heizeinrichtung 4 in der Aufnahme 5 zu befestigen. Nachdem die elektrische Heizeinrichtung 4 in die Aufnahme 5 eingeführt worden ist, wird die Aufnahme 5 durch eine Nut am Verteilergehäuse 69 verschlossen, wodurch ein Herausrutschen verhindert wird.

Durch die in Zusammenhang mit Figuren 32 bis 38 beschriebenen Ausführungsformen können Kosten und Zeit bei der Montage der elektrischen Heizeinrichtung 4 eingespart werden.

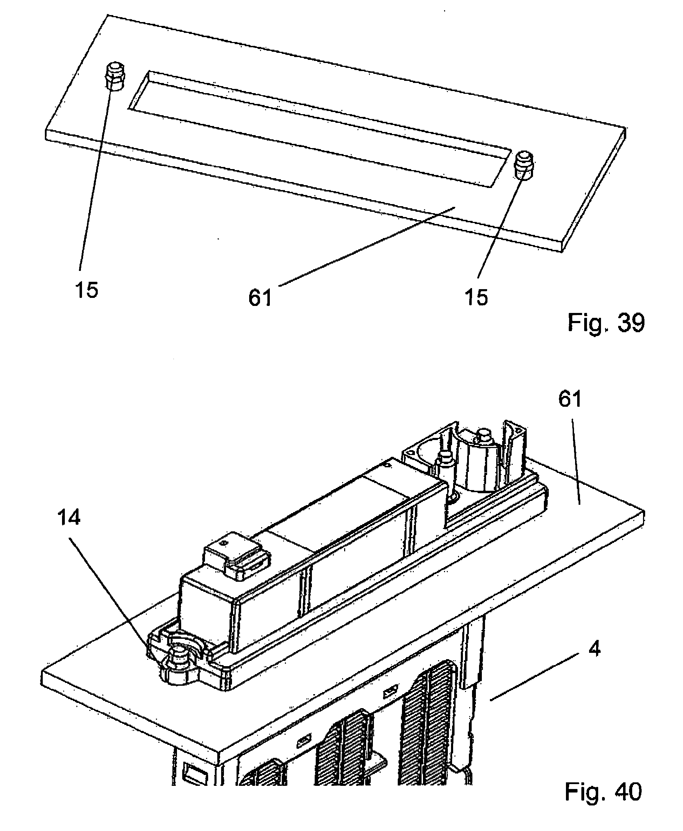

Die Fig. 39 und Fig. 40 zeigen ein weiteres Ausführungsbeispiel gemäß vorliegender Erfindung. In diesem Ausführungsbeispiel sind die Sicherungsmittel 14 als Rastmittel (beispielsweise in der Form eines Clips) ausgebildet, die mit entsprechenden Gegenstrukturen 15 auf der oberen Platte 61 in Eingriff stehen. Die Gegenstrukturen 15 können hierbei einstückig mit der oberen Platte 61 ausgebildet sein.

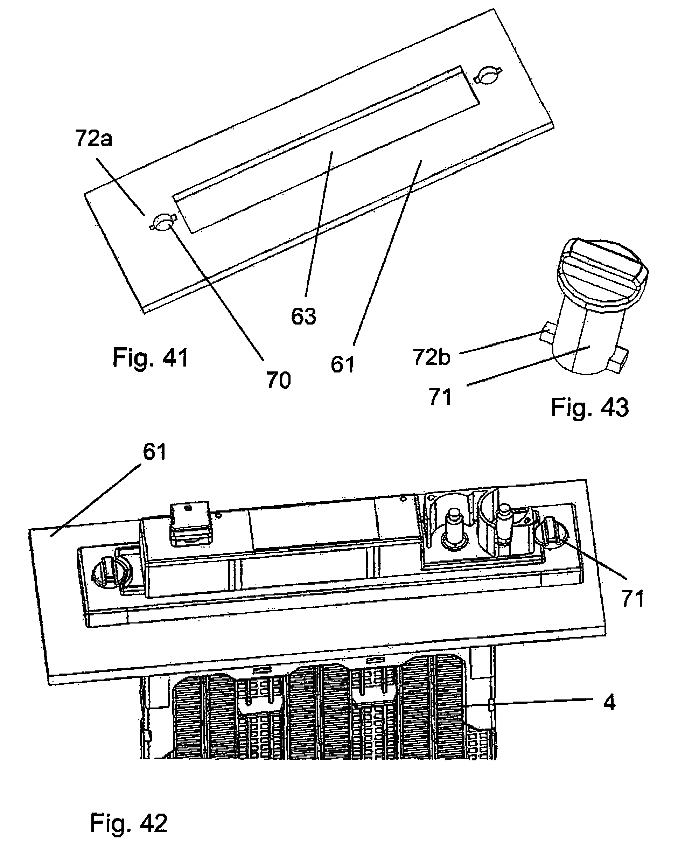

Die Fig. 41 bis 43 zeigen ein weiteres Ausführungsbeispiel gemäß vorliegender Erfindung. In diesem Ausführungsbeispiel sind an der oberen Platte 61 neben der Öffnung 63 für die elektrische Heizeinrichtung 4 zwei weitere Öffnungen 70 vorgesehen. Die Öffnungen sind vorzugsweise kreisrund ausgebildet und weisen zusätzlich jeweils zwei radial abstehende Ausnehmungen 72a auf. Nach dem Einschieben der elektrischen Heizeinrichtung 4 werden als Sicherungsmittel 14 zwei Halteelemente 71 durch die Öffnungen 70 geschoben und anschließend verdreht, so dass aufgrund der einstückig angeformten Rastnasen 72b eine Sicherung der elektrischen Heizeinrichtung gegen ein unbeabsichtigtes Lösen gewährleistet ist.

Vorteilhafter Weise kann bei allen beschriebenen Ausführungsbeispielen auf externes Befestigungsmaterial verzichtet werden, so dass ein Einbau einer elektrischen Heizeinrichtung 4 in ein Heizungssystem 1 eines Kraftfahrzeuges schneller und unproblematischer gelingt.

### Bezugsziffernliste

- 1: Heizungssystem
- 2: Klimaanlage
- 3: Gehäuse
- 4: elektrische Heizeinrichtung
- 5: Aufnahme
- 6: Einschuböffnung
- 7: Einschubrichtung
- 8: Rahmen
- 9: elektrische PTC-Heizelemente
- 9A: Heizrippen
- 10: erstes axiales Ende
- 11: zweites axiales Ende
- 12: elektrische Anschlusseinrichtungen
- 13: Anschlussgehäuse
- 14: Sicherungsmittel
- 15: Gegenstrukturen
- 20: erstes Ausführungsbeispiel
- 21: Abschlusseinrichtung
- 22: erster Rahmenflügel
- 23: zweiter Rahmenflügel
- 24: radial
- 25: längliche Schmalseite
- 26: zugewandte Seite
- 27: Positionierspitze
- 28: axial wirkende Rastmittel
- 30: zweites Ausführungsbeispiel
- 31: Rasthaken
- 32: freie Enden
- 33: Sicherheitsanschlag
- 34: länglicher Haltekörper
- 35: Rahmenwandung
- 36: anderes Ausführungsbeispiel
- 37: Ausführungsbeispiel
- 38: weiteres Ausführungsbeispiel
- 39: Stufen
- 40: zusätzliches Ausführungsbeispiel
- 41: illustriertes Ausführungsbeispiel
- 42: Aufnahmeaußenfläche
- 43: Mittel zum Lösen einer Rastverbindung
- 44: Rastverbindung
- 45: Einhausungen
- 50: Ausführungsbeispiel
- 51: nächstes Ausführungsbeispiel
- 52: Dichtungslippe
- 53: Innendruck
- 54: Schwingungsdämpfer
- 55: Befestigungsrippe
- 56: obere Dreheinrichtung am Rahmen
- 57: untere Dreheinrichtung am Rahmen
- 58: Bajonettverschlusssystem
- 59: Poka-Yoke-Einrichtung
- 60: Drehachse61 obere Platte
- 62: untere Platte
- 63: Öffnung
- 64: obere Dreheinrichtung im Gehäuse
- 65: Führungsschiene
- 66: Keilrippe
- 67: Haken
- 68: Rippe
- 69: Verteilergehäuse
- 70: Öffnung
- 71: Halteelement
- 72a: Ausnehmung
- 72b: Rastnase

## Patentansprüche

1. Heizungssystem (1) eines Kraftfahrzeuges, insbesondere Klimaanlage (2) zum Heizen einer Fahrgastzelle eines Kraftfahrzeuges, mit einer elektrischen Heizeinrichtung (4) und mit einer Aufnahme zum Halten der elektrischen Heizeinrichtung (4), bei welchem die elektrische Heizeinrichtung (4) einen Rahmen (8) aufweist, in welchem elektrische Heizelemente (9) angeordnet werden können, und bei welchem die Aufnahme (5) eine Einschuböffnung (6) aufweist, in welche der Rahmen (8) der elektrischen Heizeinrichtung (4) entlang einer Einschubrichtung (7) eingeschoben werden kann, ***dadurch gekennzeichnet, dass*** der Rahmen (8) der elektrischen Heizeinrichtung (4) und/oder die Aufnahme (5) zum Halten der elektrischen Heizeinrichtung (4) Mittel (14) zum Sichern gegen ein unbeabsichtigtes Lösen des Rahmens (8) von der Aufnahme (5) aufweisen.

2. Heizungssystem (1) nach Anspruch 1, ***dadurch gekennzeichnet, dass*** die Sicherungsmittel (14) axial wirkende Rastmittel (28) umfassen, welche herstellerseitig an dem Rahmen (8) der elektrischen Heizeinrichtung (4) angeordnet sind.

3. Heizungssystem (1) nach einem der vorhergehenden Ansprüche, ***dadurch gekennzeichnet, dass*** die Sicherungsmittel (14) oder axial wirkende Rastmittel (28) mit dem Rahmen (8) der elektrischen Heizeinrichtung (4) einstückig ausgebildet sind.

4. Heizungssystem (1) nach einem der vorhergehenden Ansprüche, ***dadurch gekennzeichnet, dass*** die Sicherungsmittel (14) oder axial wirkende Rastmittel (28) wenigstens einen Rasthaken (31) aufweisen, welcher mit seinem freien Ende (32) entgegen der Einschubrichtung (7) des Rahmens (8) ausgerichtet ist.

5. Heizungssystem (1) nach einem der vorhergehenden Ansprüche, ***dadurch gekennzeichnet, dass*** die Sicherungsmittel (14) oder axial wirkende Rastmittel (28) eine Positionierspitze (27) aufweisen.

6. Heizungssystem (1) nach einem der vorhergehenden Ansprüche, ***dadurch gekennzeichnet, dass*** die Sicherungsmittel (14) oder axial wirkende Rastmittel (28) an einem Gehäuse (3) der Aufnahme (5) befestigt sind.

7. Heizungssystem (1) nach einem der vorhergehenden Ansprüche, **da*durch gekennzeichnet, dass*** die Sicherungsmittel (14) oder axial wirkende Rastmittel (28) umlaufend an einer Einschuböffnung (6) der Aufnahme (5) angeordnet sind.

8. Heizungssystem (1) nach einem der vorhergehenden Ansprüche, ***dadurch gekennzeichnet, dass*** die Sicherungsmittel (14) oder axial wirkende Rastmittel (28) innerhalb einer Einschuböffnung (6) der Auf nahme (5) oder in die Einschuböffnung (6) hinein ragend angeordnet sind.

9. Heizungssystem (1) nach einem der vorhergehenden Ansprüche, ***dadurch gekennzeichnet, dass*** die Sicherungsmittel (14) oder axial wirkende Rastmittel (28) wenigstens einen Rasthaken (31) aufweisen, welcher mit seinem freien Ende (32) in Einschubrichtung (7) des Rahmens (8) ausgerichtet ist.

10. Heizungssystem (1) nach einem der vorhergehenden Ansprüche, ***dadurch gekennzeichnet, dass*** die Sicherungsmittel (14) oder axial wirkende Rastmittel (18) eine Dichtlippe (52) und/oder einen Schwingungsdämpfer (54) umfassen.

11. Heizungssystem (1) nach einem der vorhergehenden Ansprüche, ***dadurch gekennzeichnet, dass*** die Sicherungsmittel (14) oder axial wirkende Rastmittel (18) Mittel (43) zum Lösen einer Rastverbindung (44) aufweisen.

12. Heizungssystem (1) nach Anspruch 1,
***dadurch gekennzeichnet, dass*** die Sicherungsmittel (14) zumindest einen Teil eines Bajonettverschlusssystems (58) umfassen.

13. Heizungssystem (1) nach Anspruch 1,
***dadurch gekennzeichnet, dass*** die Sicherungsmittel (14) zumindest eine an dem Rahmen (8) ausgebildete Führungsschiene (65) und/oder zumindest eine an dem Rahmen (8) ausgebildete Keilrippe (66) aufweisen, welche keilförmig ausgebildet sind.

14. Rahmen (8) einer elektrischen Heizeinrichtung (4) eines Heizungssystems (1) an einem Kraftfahrzeug, insbesondere einer Klimaanlage (2) einer Fahrgastzelle, ***dadurch gekennzeichnet, dass*** der Rahmen (8) Sicherungsmittel (14) und/oder axial wirkende Rastmittel (28) aufweist, mittels welcher der Rahmen (8) an einem Gehäuse (2) des Heizungssystems (1) axial gesichert werden und/oder einrasten kann.

15. Aufnahme (5) für eine elektrische Heizeinrichtung (4) eines Heizungssystems (1) an einem Kraftfahrzeug, insbesondere einer Klimaanlage (2) einer Fahrgastzelle, ***dadurch gekennzeichnet, dass*** die Aufnahme (5) Sicherungsmittel (14) und/oder axial wirkende Rastmittel (28) aufweist, mittels welcher der Rahmen (8) an einem Gehäuse (2) des Heizungssystems (1) axial gesichert werden und/oder einrasten kann.
